# EUROPÄISCHE PATENTSCHRIFT

(11) **EP 2 059 003 B1**
(45) Veröffentlichungstag und Bekanntmachung des Hinweises auf die Patenterteilung: **13.12.2017**
(21) Anmeldenummer: 08009201.8
(22) Anmeldetag: 19.05.2008
(51) Int. Cl.: H04L 29/08

(54) **Verfahren zum Bereitstellen von Präsenzinformationen**
Method for preparing presence information
Procédé de préparation d'informations de présence

(30) Priorität: 21.05.2007 DE 102007023841
(43) Veröffentlichungstag der Anmeldung: 13.05.2009
(73) Patentinhaber: Vodafone Holding GmbH, 40213 Düsseldorf (DE)
(72) Erfinder: Brückelmeier, Ralf, 40468 Düsseldorf (DE); Rodrigues, Bruno, 40219 Düsseldorf (DE)
(74) Vertreter: Jostarndt Patentanwalts-AG

(56) Entgegenhaltungen:
- EP-A- 1 071 295
- US-A1- 2003 065 788
- DAY LOTUS J ROSENBERG DYNAMICSOFT H SUGANO FUJITSU M: "A Model for Presence and Instant Messaging; rfc2778.txt" IETF STANDARD, INTERNET ENGINEERING TASK FORCE, IETF, CH, 1. Februar 2000 (2000-02-01), XP015008561 ISSN: 0000-0003

## Beschreibung

### Technisches Gebiet

Die Erfindung betrifft ein Verfahren und ein System zum Bereitstellen von Präsenzinformationen über den Verfügbarkeitsstatus eines mit einem IP-Netzwerk verbundenen ersten Endgeräts.

### Hintergrund der Erfindung

Es sind Präsenzdienste bekannt, die in Kommunikationsnetzwerken eingesetzt werden, um einem Teilnehmer Informationen über den Verfügbarkeitsstatus potenzieller Kommunikationspartner bereitzustellen. Anhand dieser Informationen, die im Folgenden auch als Präsenzinformationen bezeichnet werden, kann der Teilnehmer ermitteln, ob ein Kommunikationspartner über einen bestimmten Kommunikationsdienst erreichbar ist, d.h., ob eine Datennachricht an den Kommunikationspartner gesendet und von diesem empfangen werden kann bzw. ob der Kommunikationspartner eine Kommunikationsverbindung annehmen möchte. Oftmals kann der Teilnehmer anhand der Präsenzinformation ebenfalls ermitteln, über welchen Kommunikationsdienst ein Kommunikaitonspartner erreichrbar ist bzw. über welchen Kommunikationsdienst eine Kommunikationsverbindung bevorzugt aufgebaut werden soll.

Derartige Präsenzdienste werden beispielsweise in dem Dokument RFC 2278 "A Model for Presence and Instant Messaging" der IETF (Internet Engineering Task Force) und den Spezifikationen TS 22.141 http://www.3gpp.org/ftp/Specs/htmlinfo/22141.htm "Presence service; Stage 1" und TS 23.141 "Presence Service; Architecture and functional description; Stage 2" der 3GPP (3rd Generation Partnership Project) dargestellt. Die Präsenzdienste basieren im Wesentlichen darauf, dass Präsenzinformationen über den Verfügbarkeitsstatus eines Kommunikationsendgeräts eines bestimmten Teilnehmers von diesem Kommunikationsendgerät an einen Präsenzserver gesendet werden. Von dem Präsenzserver werden die Präsenzinformationen an die Kommunikationsendgeräte von Teilnehmern weitergeleitet, die sich für den Erhalt von Präsenzinformationen des bestimmten Teilnehmers registriert haben.

Insbesondere in der Spezifikation TS 22.141 wird die Möglichkeit in Betracht gezogen, Präsenzinformationen über die Verfügbarkeit eines Kommunikationsendgeräts eines Teilnehmers, welches mit einem auf dem Internetprotokoll (IP) basierenden Kommunikationsnetz verbunden ist, an ein Kommunikationsendgerät eines Teilnehmers zu senden, das mit einem Telefonnetz, wie beispielsweise einem Mobilfunknetz, verbunden ist.

Ein solcher Präsenzdienst könnte etwa im Rahmen von Kommunikationsdiensten, wie beispielsweise Instant-Messaging-Diensten (IM-Diensten) oder Voice-over-IP-Diensten (VoIP-Diensten), genutzt werden, die den Aufbau einer Kommunikationsverbindung zwischen einem Kommunikationsendgerät, das mit einem Telefonnetz verbunden ist, und einem mit einem IP-Netz verbundenen Kommunikationsendgerät ermöglichen. Insbesondere könnte ein Teilnehmer, der über ein mit dem Telefonnetz verbundenes Kommunikationsendgerät verfügt, anhand eines derartigen Präsenzdienstes Präsenzinformationen über die Verfügbarkeit eines mit dem IP-Netz verbundenen Kommunikationsendgeräts eines Kommunikationspartners erhalten, zu dem im Rahmen der zuvor genannten Kommunikationsdienste eine Kommunikationsverbindung aufgebaut werden kann.

In den zuvor genannten Dokumenten ist jedoch nicht beschrieben, in welcher Weise ein derartiger Präsenzdienst ausgeführt werden kann.

Aus der US 2003/0065788 A1 geht ein mobiles Instant Masseging und Präsenzsystem hervor. Präsenzinformationen werden von einem Server bereitgestellt, der über ein zwischengeschaltetes Netzwerk, bei dem es sich um das Internet handeln kann, mit einem Mobilfunknetzwerk verbunden ist. Clients, die Präsenzinformationen bereitstellen und empfangen bzw. anfordern, können mit dem Mobilfunknetzwerk oder dem zwischengeschalteten Netzwerk verbunden sein. In dem dargestellten System kann ein dynamischer Telefonbuchdienst bereitgestellt werden; Präsenzinformationen eines B-Teilnehmers können vor einem Anruf einem A-Teilnehmer angezeigt werden, in dessen Telefonbuch der B-Teilnehmer eingetragen ist.

Die EP 1 071 295 A2 offenbart ein Verfahren zur Benachrichtigung und zur Statusangabe in für drahtlose Kommunikationsgeräte. Von einem Verwaltungsserver und einem Statusserver werden Statusinformationen von mobilen Geräten bereitgestellt, die mit einem drahtlosen Kommunikationsnetzwerk verbunden sind. Die Server sind über ein drahtgebundenes Netzwerk und einen Gatewayserver mit dem drahtlosen Kommunikationsnetzwerk verbunden. Die bereitgestellten Statusinformationen werden in einer Liste angezeigt, über die auch Kommunikationsverbindungen (Anrufe und Textnachrichten) aufgebaut werden können. Diese Liste kann auch von einer Adressbuchapplikation eines mobilen Endgeräts erzeugt werden.

### Darstellung der Erfindung

Es ist daher eine Aufgabe der vorliegenden Erfindung, einen Präsenzdienst bereitzustellen, bei dem einem Teilnehmer, der über ein mit einem Telefonnetz verbundenes Kommunikationsendgerät verfügt, Präsenzinformationen über die Verfügbarkeit eines mit dem IP-Netzwerk verbundenen Kommunikationsendgeräts eines potenziellen Kommunikationspartners zugänglich gemacht werden.

Erfindungsgemäß wird diese Aufgabe durch ein Verfahren mit den Merkmalen des Patentanspruchs 1 und ein System mit den Merkmalen des Anspruchs 14 gelöst. Weiterbildungen der Erfindung sind Gegenstand der Unteransprüche 2 bis 13.

Die Erfindung beinhaltet somit ein Verfahren zum Bereitstellen von Präsenzinformationen über den Verfügbarkeitsstatus eines mit einem IP-Netzwerk verbundenen ersten Endgeräts eines ersten Teilnehmers, das innerhalb des IP-Netzwerks anhand eines Internetidentifizierers identifizierbar ist, an einem zweiten Endgerät eines zweiten Teilnehmers, das mit einem mit dem IP-Netzwerk verbundenen leitungsvermittelnden Telefonnetzwerk verbunden ist, bei dem
- dem Internetidentifizierer eine Rufnummer zugeordnet wird, die für den Aufbau einer Kommunikationsverbindung von dem zweiten Endgerät und zu dem ersten Endgerät heranziehbar ist,
- die Zuordnung zwischen dem Internetidentifizierer und der Rufnummer in einem Eintrag eines Adressbuchs des zweiten Endgeräts gespeichert wird,
- die Präsenzinformationen in einem mit dem IP-Netzwerk verbundenen Server empfangen werden,
- ein die Präsenzinformationen enthaltendes Dokument erzeugt und von dem Server an das zweite Endgerät gesendet wird, und
- der Eintrag des Adressbuchs aufgrund des Empfangs des Dokuments in Abhängigkeit von den Präsenzinformationen verändert wird, so dass die Präsenzinformation innerhalb des zweiten Endgeräts als Namenszusatz verarbeitet wird.

Eine Weiterbildung der Erfindung beinhaltet die Maßnahme, die Präsenzinformationen über den Verfügbarkeitsstatus des ersten Endgeräts in einem Adressbuch des zweiten Endgeräts bereitzustellen. Das Adressbuch umfasst dabei einen dem ersten Teilnehmer zugeordneten Eintrag.

Zweckmäßigerweise ist der Eintrag so beschaffen, dass er eine Zuordnung zwischen dem Internetidentifizierer des ersten Teilnehmers und einer dem Internetidentifizierer zugeordneten Rufnummer umfasst, die für den Aufbau einer Kommunikationsverbindung von dem zweiten Endgerät und zu dem ersten Endgerät verwendet werden kann.

Der Begriff Kommunikationsverbindung umfasst im Rahmen der Erfindung insbesondere Kommunikationsverbindungen, bei denen Daten zwischen den Endgeräten ausgetauscht werden. Bei derartigen Kommunikationsverbindungen wird die Anforderung für den Aufbau der Kommunikationsverbindung in der Regel gesendet, bevor nach der Annahme der Kommunikationsverbindung an einem Endgerät Daten zwischen den Endgeräten ausgetauscht werden können. Beispiele hierfür sind etwa Sprach- und/oder Videoanrufe. Ferner kann im Rahmen einer Kommunikationsverbindung auch eine Nachricht von einem Endgerät an ein weiteres Endgerät gesendet und in dem weiteren Endgerät empfangen werden. In diesem Fall entspricht das Senden der Nachricht in der Regel der Anforderung für den Aufbau der Kommunikationsverbindung.

Bei dem Internetidentifizierer handelt es sich im Rahmen der Erfindung um eine Angabe die ein Endgerät bzw. den das Endgerät betreibenden Teilnehmer innerhalb des IP-Netzwerks identifiziert und insbesondere einer Adressierung von Nachrichten an ein mit dem IP-Netzwerk verbundenes Endgerät erlaubt. Dabei enthält der Internetidentifizierer beliebige alphanumerische Zeichen und gibt in der Regel den Namen oder Kosenamen des Teilnehmers an. Dies hat den Vorteil, dass ein Kommunikationspartner den Teilnehmer bereits anhand des zur Adressierung verwendeten Internetidentifizierers identifizieren kann. Innerhalb des leitungsvermittelnden Telefonnetzes ist eine Adressierung von Nachrichten anhand eines Internetidentifizierers hingegen nicht möglich, da im Rahmen der üblicherweise in diesen Netzwerken verwendeten Signalisierungsprotokollen bis auf wenige Ausnahmen lediglich numerische Zeichen übertragen werden können. Daher ist es vorteilhaft vorgesehen, dass dem Internetidentifizierer eine innerhalb des Telefonnetzwerks verwendbare Rufnummer zugeordnet ist. Wird diese für den Aufbau einer Kommunikationsverbindung von dem zweiten Endgerät an das erste Endgerät verwendet, kann eine die Rufnummer enthaltende Anforderung für den Verbindungsaufbau von dem zweiten Endgerät über das Telefonnetzwerk an das IP-Netzwerk gesendet werden. Innerhalb des IP-Netzwerks kann die Rufnummer in den Internetidentifizierer umgesetzt werden, um die Anforderung an das erste Endgerät zu Adressieren.

Der in dem Adressbuch des zweiten Endgeräts gespeicherte Eintrag, der die Zuordnung zwischen dem Internetidentifizierer und der Rufnummer enthält, erlaubt eine Nutzung des Internetidentifizierers durch den zweiten Teilnehmer. Insbesondere kann der zweite Teilnehmer den in dem Eintrag enthaltenen Internetidentifizierer auswählen, so das entsprechend der üblichen Funktionen des Adressbuchs eine Kommunikationsverbindung unter Verwendung der dem Internetidentifizierer zugeordnete Rufnummer aufgebaut wird. Vorteilhaft werden in dem Adressbucheintrag gleichfalls Präsenzinformationen über den Verfügbarkeitszustand des ersten Endgeräts angegeben, so dass der zweite Teilnehmer beim Aufrufen des Adressbucheintrags eine Information darüber erhält, ob der erste Teilnehmer erreichbar ist. Ein Vorteil der Erfindung besteht somit darin, dass dem zweiten Teilnehmer sowohl die Zuordnung zwischen dem Internetidentifizierer und der Rufnummer als auch die Präsenzinformationen verfügbar gemacht werden, wodurch eine einfache und komfortable Kontaktaufnahme mit dem ersten Teilnehmer möglich ist.

In einer weiteren Ausführungsform der Erfindung ist es vorgesehen, dass der Eintrag in das Adressbuch eine den Internetidentifizierer umfassende erste Angabe in einem Namensfeld aufweist, wobei die erste Angabe in Abhängigkeit von den Präsenzinformationen verändert wird.

Vorteilhaft wird der Internetidentifizierer in dieser Ausführungsform zusammen mit den Präsenzinformationen in einem Namensfeld des Eintrags angegeben. Ein derartiges Feld ist in Regel standardmäßig innerhalb eines Adressbucheintrags vorgesehen, so dass zur Anzeige des Internetidentifizierers und der Präsenzinformationen kein zusätzliches Feld vorgesehen werden muss. Ferner werden die Namensfelder verschiedener Einträge beim Öffnen des Adressbuchs in der Regel in einer Liste dargestellt, um einen Eintrag auswählen zu können. Die Präsenzinformationen sind somit bereits beim Öffnen des Adressbuchs innerhalb der Liste einsehbar. Insbesondere kann die Präsenzinformation durch einen den Internetidentifizierer ergänzenden Zusatz, wie beispielsweise eine oder mehrere den Verfügbarkeitsstatus angebende Zeichen, innerhalb des den Internetidentifizierer enthaltenden Namensfeldes angegeben werden.

Eine damit verbundene Ausgestaltung der Erfindung zeichnet sich dadurch aus, dass das Dokument eine den Internetidentifizierer und eine den Verfügbarkeitsstatus anzeigende zweite Angabe umfasst und die in dem Eintrag des Adressbuchs enthaltende erste Angabe durch die zweite Angabe ersetzt wird.

In dieser Ausführungsform kann die Präsenzinformation vorteilhaft dadurch in den Eintrag des Adressbuchs eingebracht werden, dass die den Internetidentifizierer enthaltende Angabe, die insbesondere in dem Namensfeld des Eintrags enthalten ist, durch eine Angabe ersetzt wird, welche zusätzlich zu dem Internetidentifizierer den Verfügbarkeitsstatus umfasst. Eine derartige Ersetzung kann dabei im Rahmen einer standardmäßig vorgesehenen Bearbeitung des Adressbuchs vorgenommen werden.

Eine Weiterbildung der Erfindung beinhaltet, dass in dem zweiten Endgerät eine Applikation ausgeführt wird, die den Eintrag des Adressbuchs aufgrund des Empfangs des Dokuments verändert.

Darüber hinaus sieht eine Ausführungsform der Erfindung vor, dass das Dokument die dem Internetidentifizierer zugeordnete Rufnummer enthält, wobei die Rufnummer zur Identifizierung des zu verändernden Eintrags des Adressbuchs herangezogen wird.

Die Verwendung der Rufnummer zur Identifizierung des Eintrags des Adressbuchs ist vorteilhaft, da diese unveränderlich ist.

Ferner beinhaltet eine Ausgestaltung der Erfindung, dass Veränderungen des Verfügbarkeitsstatus des ersten Endgeräts in einer mit dem IP-Netzwerk verbundenen Präsenzdatenbank registriert werden und die Präsenzinformationen von der Datenbank an den Server übermittelt werden, wobei der Server in der Datenbank als einer von mehreren mit dem IP-Netzwerk verbundenen Empfängern der Präsenzinformationen eingetragen ist.

Vorteilhaft werden Veränderungen des Verfügbarkeitsstatus des ersten Endgeräts bei dieser Ausgestaltung in einer Präsenzdatenbank registriert, welche die Präsenzinformationen mehreren Empfängern, so genannten Beobachtern, zur Verfügung stellt, wobei der Server als ein Empfänger in der Präsenzdatenbank eingetragen ist.

Innerhalb des IP-Netzwerks werden Teilnehmer üblicherweise anhand des ihnen zugeordneten Internetidentifizierers identifiziert, so dass Präsenzdatenbanken die Präsenzinformation üblicherweise unter Angabe des Internetidentifizierers an die Beobachter übermitteln.

In einer Ausführungsform der Erfindung ist es daher vorgesehen, dass die Präsenzinformationen unter Angabe des Internetidentifizierers von der Präsenzdatenbank an den Server gesendet werden, wobei der Server die dem Internetidentifizierer zugeordnete Rufnummer in einer mit dem Server verbundenen Datenbank ermittelt, um das die Rufnummer enthaltende Dokument zu erzeugen.

Weiterhin ist eine Ausführungsform der Erfindung dadurch gekennzeichnet, dass das Dokument aufgrund einer Veränderung des Verfügbarkeitsstatus des ersten Endgeräts an das zweite Endgerät übermittelt wird.

Bei dieser Ausgestaltung werden Präsenzinformationen nur dann an das zweite Endgerät gesendet, wenn sich der Verfügbarkeitsstatus des ersten Endgeräts verändert. Hierdurch wird die Netzlast zur Übermittelung von Präsenzinformationen verringert.

Um die Netzlast zur Übermittelung der Präsenzinformationen weiter zu reduzieren, sieht eine Weiterbildung der Erfindung vor, dass ein aktualisierte Präsenzinformationen enthaltendes Aktualisierungsdokument erst nach Ablauf eines vorgegebenen Zeitintervalls nach der Übermittelung des Dokuments an das zweite Endgerät gesendet wird, wenn sich der Verfügbarkeitsstatus des ersten Endgeräts innerhalb des Zeitintervalls verändert.

Hierdurch wird verhindert, dass bei sehr häufigen Veränderungen des Verfügbarkeitsstatus des ersten Endgeräts bei jeder Veränderung Präsenzinformationen an das zweite Endgerät übermittelt werden.

Eine weitere Ausführungsform der Erfindung sieht vor, dass die Zuordnung zwischen dem Internetidentifizierer und der Rufnummer von dem IP-Netzwerk, insbesondere von dem Server, an das zweite Endgerät gesendet wird, wobei der Eintrag des Adressbuchs aufgrund des Empfangs der Zuordnung in dem zweiten Endgerät erzeugt wird.

Der Vorteil dieser Ausführungsform besteht darin, dass der Eintrag in das Adressbuch netzwerkgesteuert in dem zweiten Endgerät gespeichert wird.

Eine damit verbundene Ausführungsform der Erfindung zeichnet sich dadurch aus, dass die Zuordnung zwischen der Rufnummer und dem Internetidentifizierer aufgrund eines erstmaligen Empfangs einer von dem ersten Endgerät gesendeten Anforderung für den Aufbau einer Kommunikationsverbindung zu dem zweiten Endgerät von dem IP-Netzwerk an das zweite Endgerät übermittelt wird.

Hierdurch können dem zweiten Teilnehmer netzwerkgesteuert eine Zuordnung zwischen dem Internetidentifizierer und der Rufnummer eines weiteren Teilnehmers sowie die diesen Teilnehmer betreffenden Präsenzinformationen verfügbar gemacht werden, wenn dieser den zweiten Teilnehmer erstmalig kontaktiert. Falls eine Zuordnung zwischen der Rufnummer und dem Internetidentifizierer nicht besteht, bevor erstmalig eine von dem ersten Endgerät gesendete Anforderung für den Aufbau einer Kommunikationsverbindung zu dem zweiten Endgerät empfangen wird, ist es vorzugsweise vorgesehen, dass die Zuordnung zwischen der Rufnummer und dem Internetidentifizierer aufgrund eines erstmaligen Empfangs einer von dem ersten Endgerät gesendeten Anforderung für den Aufbau einer Kommunikationsverbindung zu dem zweiten Endgerät innerhalb des IP-Netzwerks erzeugt wird.

Gleichfalls kann es von dem zweiten Teilnehmer auch gewünscht sein, dass eine Zuordnung zwischen einer Rufnummer und einem Internetidentifizierer eines Teilnehmers bereits in dem Adressbuch des zweiten Endgeräts gespeichert wird und diesen Teilnehmer betreffende Präsenzinformationen empfangen werden können, bevor dieser Teilnehmer den ersten Teilnehmer erstmalig kontaktiert.

Daher ist es in einer Ausführungsform der Erfindung vorgesehen, dass der erste Teilnehmer eine Kontaktliste erstellt, die wenigstens den Internetidentifizierer des ersten Teilnehmers umfasst, und dass die Zuordnung zwischen dem Internetidentifizierer und der Rufnummer aufgrund eines netzwerkseitigen Empfangs der Kontaktliste an das zweite Kommunikationsendgerät gesendet wird.

Falls eine Zuordnung zwischen der Rufnummer und dem Internetidentifizierer nicht besteht, bevor die Kontaktliste empfangen wird, ist es vorzugsweise vorgesehen, dass die Zuordnung zwischen dem Internetidentifizierer und der Rufnummer aufgrund des netzwerkseitigen Empfangs der Kontaktliste erzeugt wird

Eine weitere Ausgestaltung der Erfindung zeichnet sich dadurch aus, dass das Dokument und/oder die Zuordnung zwischen dem Internetidentifizierer und der Rufnummer in einer SMS-Nachricht an das zweite Endgerät gesendet werden.

Vorteilhaft wird bei dieser Ausgestaltung der Short Message Service (SMS) zur Übermittelung des Internetidentifizierer und der Rufnummer an das Kommunikationsendgerät des zweiten Teilnehmers genutzt, der eine Nachrichtenübermittelung innerhalb eines leitungsvermittelnden Telefonnetzes ermöglicht.

Ferner zeichnet sich eine Ausführungsform der Erfindung dadurch aus, dass das zweite Endgerät über eine paketvermittelnde Verbindung mit dem IP-Netzwerk verbindbar ist, und das Dokument und/oder die Zuordnung zwischen dem Internetidentifizierer und der Rufnummer über die paketvermittelnde Verbindung an das zweite Endgerät übermittelt wird.

Bei dieser Ausführungsform kann vorteilhaft die beispielsweise in Mobilfunknetzen bestehende Möglichkeit, dass ein Endgerät auch über eine paketvermittelnde Kommunikationsverbindung mit einem IP-Netzwerk verbindbar ist, dazu genutzt werden, den Internetidentifizierer und die Rufnummer an das Kommunikationsendgerät des zweiten Teilnehmers zu übermitteln.

Die zuvor genannten und weitere Vorteile, Besonderheiten und zweckmäßige Weiterbildungen der Erfindungen werden auch anhand der Ausführungsbeispiele deutlich, die im Folgenden unter Bezugnahme auf die einzige Figur beschrieben werden.

### Kurze Beschreibung der Figur

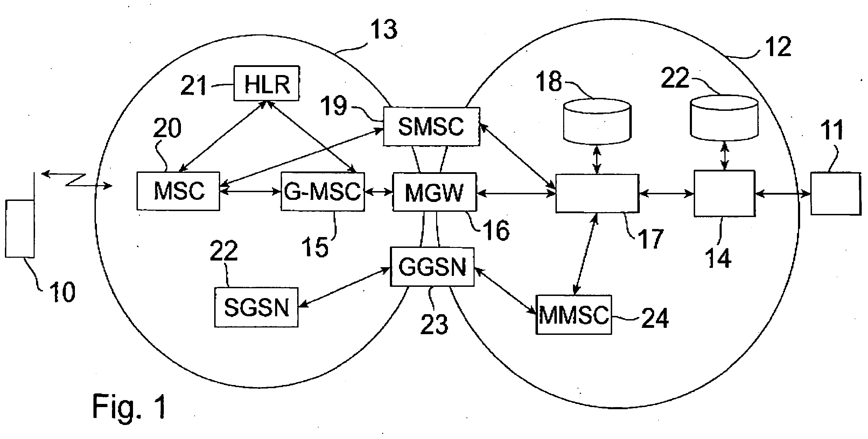

Figur 1 zeigt eine schematische Darstellung eines Kommunikationssystems, umfassend ein Mobilfunknetzwerk und ein IP-Netzwerk.

### Ausführliche Beschreibung von Ausführungsbeispielen

Figur 1 zeigt ausgewählte Elemente eines Kommunikationssystems für eine Kommunikation zwischen einem mobilen Endgerät 10 eines Mobilfunknutzers und einem Kommunikationsendgerät 11 eines IP-Nutzers, welches mit einem auf dem Internet Protocol (IP) basierenden IP-Netzwerk 12 verbunden ist, Die Kommunikation erfolgt im Rahmen von Kommunikationsdiensten, bei denen es sich auf Seiten des IP-Netzwerks 12 beispielsweise um einen Instant Messaging (IM) Dienst zum Austausch so genannter Chat-Nachrichten, einen E-Mail-Dienst oder einen Voice over IP (VoIP) Dienst zur Übertragung von Sprach- und/oder Videoanrufen. Auf Seiten des Mobilfunknetzwerks 13 nutzbare Kommunikationsdienste umfassen beispielsweise Sprach - und/oder Videoanrufe, einen Kurznachrichtendienst (SMS) und einen Multimedia Message Service (MMS).

Das Mobilfunknetzwerk 13 umfasst ein leitungsvermittelndes (Circuit Switched (CS)) Netzwerk, das beispielsweise als CS-Domäne eines Mobilfunknetzwerks nach dem UMTS-Standard (UMTS: Universal Mobile Telecommunications System) oder als ein Mobilfunknetzwerk nach dem GSM-Standard (GSM: Global System for Mobile Communications) ausgestaltet ist, und dem Fachmann an sich bekannte Netzwerkelemente aufweist. Insbesondere weist das Mobilfunknetzwerk 13 mehrere Mobilfunkvermittlungsstellen (MSCs) 15, 20 zur Vermittlung von Kommunikationsverbindung auf, von denen in Figur 1 beispielhaft zwei dargestellt sind. Die MSCs 15, 20 können mit einem Heimatregister (HLR) 21 kommunizieren, in dem teilnehmerspezifische Daten von Mobilfunkteilnehmern gespeichert sind. Eine der dargestellten MSCs 15, 20 ist als eine Gateway-MSC (G-MSC) 15 ausgestaltet und ermöglicht eine Verbindung zwischen dem Mobilfunknetzwerk 13 und dem IP-Netzwerk 12. Ferner umfasst das Mobilfunknetzwerk 13 ein Short Message Service Center (SMSC) 19, welches insbesondere mit der Mobilvermittlungsstelle 20 verbunden ist. Das SMSC 19 ist zudem direkt an das IP-Netzwerk 12 angebunden.

Vorzugsweise umfasst das Mobilfunknetzwerk 13 neben der CS-Domäne auch eine paketvermittelnde (Packet Switchted (PS)) Domäne, die in einer dem Fachmann bekannte Weise ausgestaltet ist und es ermöglicht, mit den Mobilfunknetzwerk 13 verbundene Endgeräte über eine paketvermittelnde Kommunikationsverbindung mit dem IP-Netzwerk 12 zu verbinden. Die paketvermittelnde Domäne umfasst beispielsweise einen so genannten Serving GPRS Support Node (SGSN) 25, der mit dem Heimatregister 21 kommunizieren kann, sowie einen so genannten Gateway GPRS Support Node (GGSN) 26, über den der paketvermittelnde Teil des Mobilfunknetzwerks 13 mit dem IP-Netzwerk 12 verbunden ist. Innerhalb des paketvermittelnden Teils nutzbare Kommunikationsdienste umfassen einen Multimedia Message Service (MMS) zur Übertragung von MMS-Nachrichten, die Text-, Bild- und/oder Videodaten umfassen können. Zur Durchführung des MMS ist der GGSN 26 mit einem innerhalb des IP-Netzwerks 12 befindlichen Multimedia Message Service Center (MMSC) 27 verbunden.

Mit dem Mobilfunknetzwerk 13 ist eine Vielzahl von mobilen Endgeräten von Mobilfunkteilnehmern verbunden, von denen in Figur 1 beispielhaft eines dargestellt ist. Das mobile Endgerät 10 eines Mobilfunkteilnehmers ist über ein Figur 1 nicht dargestelltes Radionetzwerk mit dem Mobilfunknetzwerk 13 verbunden. Zur Eingabe und Wiedergabe von Daten weist das Endgerät 10 eine oder mehrere Eingabeeinrichtungen und Wiedergabeeinrichtungen auf. Die Eingabeeinrichtungen können beispielsweise eine Tastatur, ein Mikrofon und optional eine Videokamera umfassen, und bei den Wiedergabeeinrichtungen kann es sich beispielsweise um einen Lautsprecher und eine als Display ausgestaltete Anzeigeeinrichtung handeln. Ferner verfügt das Endgerät 10 über einen Prozessor, der mit einem Speicher verbunden ist, und zur Steuerung des Endgeräts 10 sowie zur Ausführung von in dem Speicher gespeicherten Applikationen genutzt wird. Bei den Applikationen kann es sich beispielsweise um Java-Applikationen handeln, die mittels einer ebenfalls in dem Endgerät 10 verfügbaren Programmausführungsumgebung ausgeführt werden können.

Insbesondere ist in dem Endgerät 10 ein Adressbuch gespeichert, in dem Einträge mit Zuordnungen zwischen Rufnummern (Mobile Subscriber ISDN Numbers (MSISDNs)) und Bezeichnungen von Kommunikationspartnern hinterlegt sind. Ein Eintrag des Adressbuchs umfasst mehrere Felder, von denen eins als Namensfeld ausgebildet ist, und die Bezeichnung eines Kommunikationspartners enthält, bei der es sich in der Regel um einen Namen oder Spitznamen des Kommunikationspartner handelt. Ein Rufnummerfeld eines Eintrags ist zur Speicherung der MSISDN eines Kommunikationspartners vorgesehen. Beim Aufrufen des Adressbuchs wird in der Regel eine Liste mit den in den Namensfeldern der in dem Adressbuch vorhandenen Einträge enthaltenen Bezeichnungen von Kommunikationspartner an der Anzeigeinrichtung des mobilen Endgeräts 10 angezeigt. In dieser Liste kann der Mobilfunkteilnehmer beispielsweise mittels der Tastatur des mobilen Endgeräts 10 die Bezeichnung eines Kommunikationspartners auswählen, woraufhin das mobile Endgerät 10 unter Verwendung der in dem Eintrag des Kommunikationspartners enthaltenen MSISDN eine Anforderung für den Aufbau einer Kommunikationsverbindung an das Mobilfunknetzwerk 13 sendet.

Im Rahmen des Kommunikationsdienstes für den Aufbau von Sprach- und/oder Videoanrufen erfolgt aufgrund der Anforderung ein Aufbau eines Sprach- und/oder Videoanrufs zu dem Endgerät eines Kommunikationspartners. Hierzu werden zunächst im Rahmen eines Signalisierungsprotokolls Signalisierungsnachrichten über das Mobilfunknetzwerk 13 an das Endgerät des Kommunikationspartners gesendet, das anhand der MSISDN identifiziert wird. Der Aufbau des Sprach- und/oder Videoanrufs erfolgt dann nach der Annahme des Anrufs an dem Endgerät des Kommunikationspartners. Das Senden einer SMS- oder MMS-Nachrichten entspricht bereits einer Anforderung für den Aufbau einer Kommunikationsverbindung. Daher enthalten SMS- oder MMS-Nachrichten bereits die MSISDN der Kommunikationspartner, an welche die Nachrichten zuzustellen sind und werden nach ihrem netzwerkseitigen Empfang an das Endgerät des Kommunikationspartners weitergeleitet oder können, wie es üblicherweise bei MMS-Nachrichten der Fäll ist, mittels des Endgeräts des Kommunikationspartners abgerufen werden.

Das IP-Netzwerk 12 umfasst einen Kommunikationsserver 14 über den Kommunikationsverbindungen zu den mit dem Kommunikationsserver 14 verbundenen Kommunikationsendgeräten von IP-Nuztern aufgebaut werden können, wobei in Figur 1 beispielhaft ein Kommunikationsendgerät 11 dargestellt ist. Bei dem Kommunikationsendgerät 11 eines IP-Nutzers handelt es sich beispielsweise um ein so genanntes IP-Telefon, das im Rahmen eines VoIP-Dienstes verwendet werden kann, oder um einen gewöhnlichen Personal Computer (PC) der über Software zur Teilnahme an einem VoiP-Dienst und den weiteren zuvor genannten Kommunikationsdiensten verfügt.

Zur Anbindung an den leitungsvermittelnden Teil des Mobilfunknetzwerks 13 ist innerhalb des IP-Netzwerks 12 ein mit der Gateway-MSC 15 verbundener Netzwerkknoten 16 vorgesehen, der als Media-Gateway bezeichnet wird und für den Aufbau von Sprach- und/oder Videoanrufen verwendet wird. Der Media-Gateway 16 wird durch eine Media Gateway Control Function (MGCF) gesteuert und führt Umsetzungen zwischen den in dem leitungsvermittelnden Teil des Mobilfunknetzwerks 13 und in dem IP-Netzwerk 12 verwendeten Signalisierungs- und Datenübertragungsprotokollen durch. Die Anforderung für den Aufbau eines Sprach- und/oder Videoanrufs erfolgt innerhalb des leitungsvermittelnden Teils des Mobilfunknetzwerks 13 beispielsweise anhand des "Signalling System Number 7" (SS7), insbesondere unter Verwendung des "ISDN User Part" (ISUP) Protokolls, und innerhalb des IP-Netzwerks 12 beispielsweise anhand des "Session Initiation Protocol" (SIP). Daher ist der Media-Gateway 15 insbesondere dazu ausgebildet, von der Gateway-MSC 15 übermittelte ISUP-Nachrichten in entsprechende SIP-Nachrichten und aus dem IP-Netzwerk 12 an das Mobilfunknetzwerk 13 bzw. die Gateway-MSC 15 gesendete SIP-Nachrichten in entsprechende ISUP-Nachrichten umzusetzen. Die Verwendung anderer Protokolle als der zuvor genannten ist jedoch gleichfalls möglich.

Die Übermittlung von SMS- und MMS-Nachrichten an das IP-Netzwerk 12 erfolgt über das SMSC 19 bzw, das MMSC 27, die beide direkt an das IP-Netzwerk 12 angebunden sind. SMS-Nachrichten, die über den leitungsvermittelnden Teil des Mobilfunknetzwerks 13 als SS7-Nachrichten übertragen werden, werden in dem SMSC 19 in ein innerhalb des IP-Netzwerks 13 verwendbares Format umgewandelt und anhand eines geeigneten, IP-basierten Protokolls von dem SMSC 19 weitergeleitet. Der MMS basiert bereits auf dem IP, so dass MMS-Nachrichten ohne Format- und/oder Protokolländerungen von dem MMSC 27 innerhalb des IP-Netzwerks 12 weitergeleitet werden können. Gleichfalls kann eine derartige Umwandlung jedoch vorgesehen sein, um eine Anpassung an die weiteren Netzwerkelement des IP-Netzwerks 12 vorzunehmen.

Der Aufbau einer Kommunikationsverbindung von dem mobilen Endgerät 10 des Mobilfunkteilnehmers zu dem Kommunikationsendgerät 11 erfolgt über einen an eine Adressdatenbank 18 angebundenen Adressserver 17. dessen Funktion später erläutert wird. Der Adressserver 17 ist einerseits mit dem Media-Gateway 16 und andererseits mit dem Kommunikationsserver 16 verbunden, so dass Sprach- und/oder Videoanrufe an das Kommunikationsendgerät 11 weitergeleitet werden können. Ferner ist der Adressserver 17 mit dem SMSC 19 und mit dem MMSC 27 verbunden, um von dem mobilen Endgerät 10 gesendete SMS- oder MMS-Nachrichten bzw. die in diesen Nachrichten enthaltenen Daten an das Kommunikationsendgerät 11 weiterzuleiten.

Innerhalb des IP-Netzwerks 12 erfolgt der Aufbau einer Kommunikationsverbindung zu einem Kommunikationsendgerät 11 eines IP-Nutzers anhand von Internetidentifizierern, die beispielsweise als URI (Uniform Resource Identifier) ausgestaltet sind und zur Identifizierung des IP-Nutzers bzw. seines Kommunikationsendgeräts 11 herangezogen werden. Hierbei handelt es sich um alphanumerische Zeichen enthaltende Kennungen, welche in der Regel einen Namen bzw. Kosenamen eines Teilnehmers des Kommunikationsdienstes umfassen. In der Regel sind die Internetidentifizierer zudem hierarchisch aufgebaut und enthalten neben dem Namen des Nutzers - typischerweise durch ein @-Zeichen von dem Nutzernamen getrennt - die Bezeichnung des Servers, über den eine Kommunikationsverbindung zu dem Nutzer bzw. seinem Kommunikationsendgerät 11 hergestellt wird. Der Internetidentifizierer hat dementsprechend die Form "foo@bar.com", wobei der erste Bestandteil "foo" dem Nutzernamen und der zweite Bestandteil "bar.com" dem Domainnamen des Kommunikationsservers 14 entspricht, der über die Abfrage eines mit dem IP-Netzwerk 12 verbundenen so genannten Nameservers in die numerische IP-Adresse des Kommunikationsservers 14 umgesetzt werden kann.

Um innerhalb des IP-Netzwerks 12 beispielsweise einen Sprach- und/oder Videoanruf zu dem Kommunikationsendgerät 11 des Nutzers unter Verwendung des SIP aufzubauen, wird eine Anforderung für den Aufbau des Anrufs in Form einer SIP-Invite-Nachricht mit der Adresse "foo@bar.com" an den Kommunikationsserver 14 gesendet, der dabei anhand des Domainnamens "bar.com" identifiziert wird. Der Kommunikationsserver 14 leitet die SIP-Invite-Nachricht dann an das Kommunikationsendgerät 11 des Nutzers "foo" weiter. Hierfür ist der Kommunikationsserver 14 mit einer Lokationsdatenbank verbunden, in der insbesondere die IP-Adresse des Kommunikationsendgeräts 11 des IP-Nutzers gespeichert ist, die zur Identifizierung des Kommunikationsendgeräts 11 innerhalb des IP-Netzwerks 12 herangezogen wird. Neben dem zur Adressierung verwendeten Internetidentifizierer des als Empfänger vorgesehenen IP-Nutzers enthält die SIP-Invite-Nachricht auch den Internetidentifizierer des Absenders, d.h. des Kommunikationspartners der eine Kommunikationsverbindung zu dem Kommunikationsendgerät 11 des IP-Nutzers aufbauen möchte. Diese wird als Adresse für das Senden von Antworten auf die SIP-Invite-Nachricht und für den Sitzungsaufbau zwischen den Kommunikationsendgerät 11 und dem Kommunikationsendgerät 11 des IP-Nutzers verwendet. Ferner kann sie bei Erhalt der SIP-Invite-Nachricht an dem Kommunikationsendgerät 11 angezeigt werden, so dass der Nutzer Kenntnis über den Absender erhält.

IM- oder E-Mail-Nachrichten werden ebenfalls unter Verwendung des Internetidentifizierers des IP-Nutzers an dessen Kommunikationsendgerät 11 gesendet. Zusammen mit den Nachrichten kann ebenfalls der Internetidentifizierer des Absenders der Nachricht übermittelt werden. Dieser kann zum Senden von Antwortnachrichten verwendet werden und wird vorzugsweise zusammen mit der Nachricht an dem Kommunikationsendgerät 11 angezeigt, um den Absender der Nachricht zu identifizieren.

Innerhalb des Mobilfunknetzwerks 13 erfolgt eine Adressierung von Signalisierungsnachrichten für den Aufbau eines Sprach- und/oder Videoanrufs und die Adressierung von SMS- oder MMS-Nachrichten hingegen, wie zuvor beschrieben, anhand von MSISDNs, die aus Ziffern bestehen und in dem Fachmann bekannter Weise für das Routing einer Anforderung für einen Verbindungsaufbau herangezogen werden. Eine Adressierung anhand eines Internetidentifizierers ist insbesondere innerhalb des leitungsvermittelnden Teils Mobilfunknetzwerks 13 nicht möglich, da das SS7 bis auf wenige Ausnahmen keine Übertragung von Buchstaben erlaubt.

Daher ist es vorgesehen, dass die Adressierung einer Anforderung für den Aufbau einer Kommunikationsverbindung, die von dem mobilen Endgerät 10 des Mobilfunkteilnehmers an das Kommunikationsendgerät 11 des IP-Nutzers gesendet wird, ebenfalls anhand einer MSISDN erfolgt, die dem IP-Nutzer zusätzlich zu dem Internetidentifizierer zugeordnet wird. Die Anforderung wird dabei über den Adressserver 17 an den Kommunikationsserver 14 übermittelt, welcher die MSISDN anhand einer in der Adressdatenbank 17 gespeicherten Zuordnung zwischen der MSISDN und dem Internetidentifizierer des IP-Nutzers in den Internetidentifizierer umsetzt, so dass die Anforderung in der zuvor beschriebenen Weise innerhalb des IP-Netzwerks 12 an den Kommunikationsserver 14 weitergeleitet werden kann.

In einer Ausführungsform der Erfindung ist es vorgesehen, dass zwischen dem Internetidentifizierer und der MSISDN des IP-Nutzers des Kommunikationsendgeräts 11 ein eindeutiger Zusammenhang besteht.

Um die Anzahl der benötigten MSISDNs zu reduzieren kann es in einer weiteren Ausführungsform jedoch gleichfalls vorgesehen sein, dass eine MSISDN mehreren IP-Nutzern zugeordnet wird, so dass kein eindeutiger Zusammenhang zwischen der MSISDN und dem Internetidentifizierer besteht. In dieser Ausführungsform wird einem Internetidentifizierer jedoch zusätzlich die MSISDN eines als Kontaktpartner des IP-Nutzers auftretenden Mobilfunkteilnehmers zugeordnet, die im folgenden als Teilnehmernummer bezeichnet wird, so das ein eindeutiger Zusammenhang zwischen dem Internetidentifizierer eines IP-Nutzers und der Kombination aus der dem IP-Nutzer zugeordneten MSISDN und einer Teilnehmernummer besteht. Die Teilnehmernummer wird auch in die von dem mobilen Endgerät 10 gesendete Anforderung für den Aufbau einer Kommunikationsverbindung zu dem Kommunikationsendgerät 11 eingebracht und in dieser Ausführungsform zusätzlich zu der dem IP-Nutzer zugeordneten MSISDN für die Abfrage der Adressdatenbank 18 herangezogen.

Im Falle eines Sprach- und/oder Videoanrufs erfolgt der Aufbau einer Kommunikationsverbindung von dem mobilen Endgerät 10 eines Mobilfunkteilnehmers zu dem Kommunikationsendgerät 11 eines IP-Nutzers unter Verwendung des Adressservers 17 beispielsweise in der folgenden Weise:
Zunächst sendet das mobile Endgerät 10 des Mobilfunkteilnehmers unter Verwendung der MSISDN des IP-Nutzers eine Anforderung an die Mobilvermittlungsstelle 20, in deren Abdeckungsgebiet sich das mobile Endgerät 10 befindet. Dann sendet die Mobilvermittlungsstelle 20 die Anforderung in Form einer Initial Address Message (IAM) gemäß dem ISUP-Protokoll an die Gateway-MSC 15, welche die IAM an den Media-Gateway 16 weiterleitet. Die Weiterleitung der IAM von der Mobilvermittlungsstelle 20 über die Gateway-MSC an den Media-Gateway 16 erfolgt in einer Ausführungsform durch ein so genanntes statisches Routing. Hierzu umfassen die MSISDNs, die IP-Nutzern zugeordnet sind, eine vorgegebene Ziffernfolge, die beispielsweise in den ersten Stellen der MSISDNs enthalten sein kann. An der Ziffernfolge erkennen die Mobilvermittlungsstelle 20 und die Gateway-MSC 16, dass die IAM an den Media-Gateway weiterzuleiten ist. Die Weiterleitung der IAM erfolgt in dieser Ausführungsform anhand einer SS7-Adresse des Media-Gateways 16. In einer weiteren Ausführungsform ist es vorgesehen, dass in dem Heimatregister 21 auch teilnehmerspezifische Daten von IP-Nutzern gespeichert sind, und die IAM anhand dieser Daten an das IP-Netzwerk 12 und insbesondere den Media-Gateway 16 geleitet wird. In dieser Ausführungsform können IP-basierte Netzwerkknoten in dem Mobilfunknetzwerk 13 enthalten sein, die auf das Heimatregister 21 zugreifen können. Ein eingehender Anruf wird dabei zu einem solchen Netzwerkknoten und von diesem zu dem Media-Gateway weitergeleitet.

Der Media-Gateway 16 wandelt die IAM in eine die MSISDN enthaltene SIP-Invite-Nachricht um, die von dem Media-Gateway 16 an den Adressserver 17 weitergeleitet wird. In dem Adressserver 17 wird die in der SIP-Invite-Nachricht enthaltene MSISDN ausgelesen und durch eine Abfrage der Adressdatenbank 18, die gegebenenfalls zusätzlich zu der MSISDN unter Heranziehung der ebenfalls in der IAM und der SIP-Invite-Nachricht enthaltenen Teilnehmernummer des Mobilfunkteilnehmers erfolgt, der Internetidentifizierer des IP-Nutzers ermittelt. Nach der Ermittlung des Internetidentifizierers erzeugt der Adressserver 17 eine neue, den Internetidentifizierer enthaltende SIP-Invite-Nachricht und übermittelt diese an den Kommunikationsserver 14, welcher die Nachricht in der zuvor bereits beschriebenen Weise an das Kommunikationsendgerät 11 weiterleitet, so dass die Kommunikationsverbindung an dem Kommunikationsendgerät 11 angenommen werden kann. Sofern der Kommunikationsserver 14 ein anderes IP-basiertes Protokoll als das SIP verwendet, wird die SIP-Invite-Nachricht vor der Übermittlung an den Kommunikationsserver 14 umkodiert, oder der Adressserver 17 übermittelt anstelle der SIP-Invite-Nachricht eine entsprechende Nachricht des verwendeten Signalisierungsprotokolls an den Kommunikationsserver 14.

Um eine Nachrichten im Rahmen des SMS an das Kommunikationsendgerät 11 zu senden, wird die SMS-Nachricht zunächst unter Verwendung der MSISDN des IP-Nutzers an die Mobilvermittlungsstelle 20 gesendet, welches die Nachricht an das SMSC 19 weiterleitet. Das SMSC 19 leitet die Nachricht wiederum innerhalb des IP-Netzwerks 12 unter Nutzung eines IP-basierten Protokolls an den Adressserver 17 weiter. In einer Ausführungsform erfolgt die Weiterleitung der Nachricht von dem SMSC 19 an den Adressserver 17 wiederum durch ein statisches Routing, d.h. das SMSC 19 erkennt an einer in der der MSISDN enthaltenen Ziffernfolge, dass die Nachricht an den Adressserver 17 weiterzuleiten ist. Gleichfalls kann es auch vorgesehen sein, dass das SMSC 19 auf teilnehmerspezifische Daten des IP-Nutzers zugreift, die in dem Heimatregister 21 gespeichert sind und Routing-Informationen zur Weiterleitung der Nachricht an den Adressserver 17 enthalten, Die an den Adressserver 17 weitergeleitete Nachricht enthält die MSISDN des IP-Nutzers, die von dem Adressserver 17 herangezogen wird, um den Internetidentifizierer des IP-Nutzers in der Adressdatenbank 18 zu ermitteln. Unter Verwendung des Internetidentifizierers wird die Nachricht dann an den Kommunikationsserver 14 weitergeleitet. Hierzu wird die Nachricht in ein geeignetes Format, wie beispielsweise in ein im Rahmen von instant Messaging Diensten verwendetes Format oder ein E-Mail-Format umgewandelt und im Rahmen eines entsprechenden Protokolls an den Kommunikationsserver 14 übermittelt. Von dem Kommunikationsserver 14 wird die Nachricht dann an das Kommunikationsendgerät 11 zugestellt oder mittels des Kommunikationsendgeräts 11 von dem Kommunikationsserver 14 abgerufen.

Gleichfalls können auch im Rahmen des MMS Nachrichten unter Verwendung der dem IP-Nutzer zugeordneten MSISDN von dem mobilen Endgerät 10 an das Kommunikationsendgerät 11 gesendet werden. Dabei werden zunächst MMS-Nachricht über den paketvermittelnden Teil des Mobilfunknetzwerks 13, d.h. über den SGSN 25 und den GGSN 26, an das MMSC 27 gesendet. Dieses erkennt anhand der zur Adressierung verwendeten MSISDN, beispielsweise anhand der zuvor bereits erwähnten, in der MSISDN enthaltenen Ziffernfolge, dass die Nachricht an den Adressserver 17 zu übermitteln ist und leitet die Nachricht unter Angabe der MSISDN des IP-Nutzer an den Adressserver 17 weiter. Beim Empfang der Nachricht ermittelt der Adressserver 17 anhand der MSISDN den Internetidentifizierer des IP-Nutzers und übermittelt die Nachricht unter Verwendung des Internetidentifizierers an den Kommunikationsserver 14. Dabei wird die Nachricht vor der Übermittlung an den Kommunikationsserver 14 vorzugsweise in ein geeignetes Format, wie beispielsweise ein E-Mail-Format umgewandelt und im Rahmen eines entsprechenden Protokolls an den Kommunikationsserver 14 übermittelt. Die Formatumwandlung kann in dem MMSC 27 oder in dem Adressserver 17 vorgenommen werden. Von dem Kommunikationsserver 14 wird die Nachricht dann wiederum an das Kommunikationsendgerät 11 zugestellt oder mittels des Kommunikationsendgeräts 11 von dem Kommunikationsserver 14 abgerufen.

Eine Kommunikationsverbindung von dem Kommunikationsendgerät 11 des IP-Nutzers zu dem Endgerät 10 des Mobilfunkteilnehmers wird in einer beispielhaften Ausgestaltung in der folgenden Weise aufgebaut:
Für den Aufbau eines Sprach- und/oder Videoanrufs sendet das Kommunikationsendgerät 11 beispielsweise bereits unter Verwendung der Teilnehmernummer des Mobilfunkteilnehmers eine SIP-Invite-Nachricht an den Kommunikationsserver 14, der diese Nachricht über einen oder mehrere Proxy-Server an den Media-Gateway 16 sendet, wobei insbesondere der Adressserver 17 einen der Proxy-Server bilden kann. Die Adressierung kann dabei beispielsweise anhand einer URI erfolgen, welche sich aus der Teilnehmernummer und einem Domainnamen des Media-Gateway 16 zusammensetzt, so dass die SIP-lnvite-Nachricht anhand des enthaltenen Domainnamens an den Media-Gateway 16 weitergeleitet werden kann. In dem Media-Gateway 16 wird die SIP-Invite-Nachricht in eine IAM umgesetzt, die an die Gateway-MSC 15 übermittelt wird. Von der Gateway-MSC 15 wird die IAM innerhalb des Mobilfunknetzwerks 13 in einer dem Fachmann an sich bekannten Weise an die Mobilvermittlungsstelle 20 (Visited-MSC) weitergeleitet, in deren Abdeckungsbereich sich das mobile Endgerät 10 befindet. Die Mobilvermittlungsstelle 20 sendet daraufhin eine Nachricht (Setup-Nachricht) an das mobile Endgerät 10, um dieses über den eingehenden Anruf zu informieren, so dass die Kommunikationsverbindung an dem mobilen Endgerät 10 angenommen werden kann. Die von dem Kommunikationsendgerät 11 gesendete SIP-Invite-Nachricht enthält vorzugsweise auch den Internetidentifizierer des IP-Nutzers. Dabei kann es vorgesehen sein, dass der als Proxy-Server verwendete Adressserver 17 die dem Internetidentifizierer zugeordnete MSISDN durch eine Abfrage der Adressdatenbank 18 ermittelt und in die SIP-lnvite-Nachricht einfügt. Die MSISDN kann dann innerhalb des Media-Gateway 16 in die IAM übernommen werden und innerhalb der Setup-Nachricht an das mobile Endgerät 10 übertragen werden.

Zur Übermittlung einer Nachricht von dem Kommunikationsendgerät 11 an das mobile Endgerät 10 unter Nutzung des SMS oder des MMS, wird die Nachricht zunächst in einem geeigneten Format über den Kommunikationsserver 14 und einen oder mehrere Proxy-Server an das SMSC 19 oder das MMSC 27 gesendet. Der Adressserver 17 kann dabei wiederum einen der verwendeten Proxy-Server bilden. Einer der verwendeten Proxy-Server kann dabei auch so ausgestaltet sein, dass er in Abhängigkeit von dem Format der Nachricht den Dienst auswählt, über den die Nachricht an das mobile Endgerät 10 gesendet wird. Beispielsweise kann es vorgesehen sein, dass eine Nachricht in einem Instant-Messaging-Format per SMS an das mobile Endgerät 10 zugestellt und daher an den SMSC 19 übermittelt wird, während eine Nachricht in einem E-Mail-Format per MMS an das mobile Endgerät 10 zugestellt und daher an das MMSC 27 gesendet wird. Von dem SMSC 19 bzw. dem MMSC 27 wird die Nachricht dann in an sich bekannter Weise über den leitungsvermittelnden oder den paketvermittelnden Teil des Mobilfunknetzwerks 13 an das mobile Endgerät 10 übermittelt. Vorzugsweise wird die Nachricht von dem Kommunikationsendgerät 11 unter Angabe des Internetidentifizierers des IP-Nutzers gesendet. Anhand des Internetidentifizierers kann durch eine Abfrage der Adressdatenbank 18 die dem IP-Nutzer zugeordnete MSISDN ermittelt und als Absenderangabe zusammen mit der Nachricht an das mobile Endgerät 10 weitergeleitet werden.

Bei dem insoweit zuvor beschriebenen Kommunikationssystem können innerhalb des IP-Netzwerks 12 Internetidentifizierer beim Aufbau von Kommunikationsverbindungen genutzt werden, während der Verbindungsaufbau auf Seiten des Mobilfunknetzwerks 13 ausschließlich auf der Verwendung von MSISDNs basiert. Diese haben gegenüber den Internetidentifizierern jedoch den Nachteil, dass sie von dem Mobilfunkteilnehmer nicht unmittelbar zur Identifizierung eines IP-Nutzers herangezogen werden können. Die Internetidentifizierer ermöglichen dies hingegen, da sie einen Namen des IP-Nutzers enthalten, der zur unmittelbaren Identifizierung des IP-Nutzers verwendet werden kann. Daher ist es vorgesehen, die für den Verbindungsaufbau verwendeten Internetidentifizierer auch innerhalb des Mobilfunknetzwerks 13 nutzbar zu machen. Hierfür ist es vorgesehen, dass der Internetidentifizierer eines IP-Nutzers zusammen mit der dem IP-Nutzer zugeordneten MSISDN von dem Adressserver 17 an das mobile Endgerät 10 eines Mobilfunkteilnehmers übermittelt werden. Innerhalb des mobilen Endgeräts 10 wird dann eine Zuordnung zwischen dem Internetidentifizierer und der MSISDN des IP-Nutzers in das Adressbuch des mobilen Endgeräts 10 eingetragen.

In einer Ausführungsform der Erfindung erfolgt die Übermittelung eines den Internetidentifizierer und die MSISDN eines IP-Nutzers enthaltenden Dokuments innerhalb einer an das mobile Endgerät 10 gesendeten SMS-Nachricht (SMS: Short Message Service). Das Dokument wird dabei in dem Adressserver 17 erzeugt und über die IP-Verbindung an das SMS-C 19 übermittelt, welches eine das Dokument enthaltende Kurznachricht erzeugt und diese in einer dem Fachmann an sich bekannten Weise über die CS-Domäne des Mobilfunknetzwerks 10 an das mobile Endgerät 10 des Mobilfunkteilnehmers weiterleitet.

In einer weiteren Ausgestaltung der Erfindung kann das Dokument auch über den paketvermittelnden Teil des Mobilfunknetzwerks 13 von dem Adressserver 17 an das mobile Endgerät 10 gesendet werden, falls über den paketvermittelnden Teil des Mobilfunknetzwerks 13 eine Verbindung zwischen dem mobilen Endgerät 10 und dem IP-Netzwerk 12 besteht. Die Übermittelung der Dokumente über die paketvermittelnde Verbindung erfolgt anhand eines auf dem IP aufsetzenden Protokolls, wie beispielsweise des Hypertext Transfer Protocols (HTTP), des User Datagram Protocols (UDP) oder des Transmission Control Protocols (TCP).

Gleichfalls kann es auch vorgesehen sein, dass der Adressserver 17 zunächst prüft, ob über den paketvermittelnden Teil des Mobilfunknetzwerks 13 eine Verbindung zu dem mobilen Endgerät 10 besteht, und das Dokument über diese Verbindung an das mobile Endgerät 10 sendet, wenn das Bestehen der Verbindung festgestellt wird. Falls das Bestehen einer derartigen Verbindung nicht festgestellt wird, wird eine das Dokument enthaltende SMS-Nachricht über das Short Message Service Center 19 an das mobile Endgerät 10 gesendet.

Darüber hinaus kann es auch vorgesehen sein, dass das Dokument anhand einer MMS-Nachricht (MMS: Multimedia Message Service) an das mobile Endgerät 10 gesendet wird. Diese MMS-Nachricht kann in der dem Fachmann an sich bekannten Weise durch eine an das mobile Endgerät 10 gesendete SMS-Nachricht "angekündigt" werden, und nach Erhalt der SMS-Nachricht automatisch von dem mobilen Endgerät 10 abgerufen werden.

Ausgelöst wird die Übermittelung eines den Internetidentifizierer und die MSISDN eines IP-Nutzers enthaltenden Dokuments in einer Ausgestaltung durch eine erstmalige Anforderung für den Aufbau einer Kommunikationsverbindung von dem Kommunikationsendgerät 11 des IP-Nutzers zu dem mobilen Endgerät 10 des Mobilfunkteilnehmers. Bei dem Empfang der erstmaligen Anforderung in dem Adressserver 17 wird dabei in der Adressdatenbank 18 geprüft, ob dem in der Anforderung enthaltenen Internetidentifizierer bereits eine MSISDN zugeordnet ist. Falls dies nicht der Fall ist, wird diese Zuordnung erzeugt und nachfolgend an das mobile Endgerät 10 übermittelt; ansonsten wird die bereits bestehende Zuordnung von dem Adressserver 17 an das mobile Endgerät 10 übermittelt.

Nach der Übermittelung wird ferner die in der Anforderung enthaltene Teilnehmernummer in dem den Internetidentifizierer enthaltenden Eintrag der Adressdatenbank 18 gespeichert, Bei Empfang einer weiteren von demselben Kommunikationsendgerät 11 gesendeten Anforderung für den Aufbau einer Kommunikationsverbindung zu demselben mobilen Endgerät 10 kann somit in der Adressdatenbank 18 geprüft werden, ob die Zuordnung zwischen dem Internetidentifizierer und der MSISDN bereits an das mobile Endgerät 10 gesendet worden ist und das erneute Senden der Zuordnung vermieden werden.

Falls, wie zuvor beschrieben, eine Mehrfachzuordnung zwischen einer MSISDN und mehreren Internetidentifizierern vorgesehen ist, wird beim Empfang der erstmaligen Anforderung für den Aufbau einer Kommunikationsverbindung von dem Kommunikationsendgerät 11 zu dem mobilen Endgerät 10 in der Datenbank eine Zuordnung zwischen dem Internetidentifizierer und der Kombination einer MSISDN und der in der Anforderung enthaltenen Teilnehmernummer erzeugt und in der Adressdatenbank 18 gespeichert. Nachfolgend wird die Zuordnung zwischen dem Internetidentifizierer und der MSISDN an das mobile Endgerät 10 übermittelt. Anhand der bei der Erzeugung der Zuordnung in die Adressdatenbank 18 eingetragenen Teilnehmernummer kann bei Empfang einer weiteren von dem Kommunikationsendgerät 11 gesendeten Anforderung für den Aufbau einer Kommunikationsverbindung zu demselben mobilen Endgerät 10 geprüft werden, ob die Zuordnung bereits an das mobile Endgerät 10 gesendet worden ist, wodurch eine wiederholte Übermittelung der Zuordnung vermieden werden kann.

Gleichfalls kann es vorgesehen sein, dass der Mobilfunkteilnehmer eine so genannte Kontaktliste erstellt, welche die Internetidentifizierer von ausgewählten IP-Nutzern enthält, bei denen es sich beispielsweise um die IP-Nutzer handelt, mit denen der Mobilfunkteilnehmer häufig kommuniziert bzw. zukünftig kommunizieren möchte. Die Kontaktliste wird vorzugsweise in dem Kommunikationsserver 14 gespeichert und von dem Benutzer beispielsweise mittels eines Endgeräts erstellt, welches direkt über das IP-Netzwerk 12 mit dem Kommunikationsserver 14 verbunden ist, Beispielsweise kann der Mobilfunkteilnehmer dabei neben dem mobilen Endgerät 10 auch über ein mit dem IP-Netzwerk 12 verbundenes Endgerät verfügen, mit dem er den von dem Kommunikationsserver 14 bereitgestellten Kommunikationsdienst nutzt und mit dem er die Kontaktliste erstellt. Von dem Kommunikationsserver 14 wird die Kontaktliste vorzugsweise aufgrund einer Anweisung des Mobilfunknutzers, die beispielsweise über das genannte Endgerät gegeben werden kann, an den Adressserver 17 übertragen. Gleichfalls kann es jedoch auch vorgesehen sein, dass der Mobilfunknutzer die Kontaktliste in geeigneter Weise direkt zu dem Adressserver 17 übermittelt.

Beim Empfang der Kontaktliste stellt der Adressserver 17 zunächst fest, welchen der in der Kontaktliste enthaltenen Internetidentifizierern bereits eine MSISDN in der Adressdatenbank 18 zugeordnet ist. Den Intemetidentifizierern, denen bislang keine MSISDN zugeordnet war, wird daraufhin eine neue MSISDN zugeordnet, und die Zuordnung in der Adressdatenbank 18 gespeichert. Nachfolgend werden die Zuordnungen zwischen den in der Kontaktliste enthaltenen Internetidentifizierern und den MSISDNs an das mobile Endgerät 10 des Mobilfunkteilnehmers übertragen. Werin eine Mehrfachzuordnung zwischen einer MSISDN und mehreren Internetidentifizierern vorgesehen ist, wird beim Empfang der Kontaktliste in dem Adressserver 17 in der Adressdatenbank 18 jeweils eine Zuordnung zwischen den in der Kontaktliste enthaltenen Internetidentifizierern und der Kombination einer MSISDN und der in der Anforderung enthaltenen Teilnehmernummer erzeugt und in der Adressdatenbank 18 gespeichert. Dann werden die Zuordnungen zwischen den Internetidentifizierern und den MSISDNs an das mobile Endgerät 10 übermittelt.

Die an ein mobiles Endgerät 10 gesendeten, eine Zuordnung zwischen einem Internetidentifizierer und einer MSISDN enthaltenden Dokumente, umfassen Datenfelder, die den innerhalb des Adressbuchs des mobilen Endgeräts 10 innerhalb eines Eintrags vorgesehenen Feldern entsprechen, und sind vorzugsweise in einem zur Übermittelung von Kontaktdaten vorgesehenen Standardformat ausgeführt. Ein Beispiel für ein derartiges Format ist das bekannte vCard-Format. Gleichfalls kann jedoch auch jedes andere geeignete Format zur Übertragung von Kontaktdaten verwendet werden.

Innerhalb des mobilen Endgeräts 10 des Mobilfunknutzers werden die zuvor beschriebenen Dokumente, welche den Internetidentifizierer eines IP-Nutzers sowie die dem IP-Nutzer zugeordnete MSISDN enthalten, empfangen und von einer mittels des Prozessors ausgeführten Applikation ausgewertet, die im Folgenden als Adressbuchapplikation bezeichnet wird. Die Adressbuchapplikation kann über einen bestimmten Port innerhalb des mobilen Endgeräts 10 angesprochen werden, an den die Dokumente von dem Adressserver 17 adressiert werden. Die Applikation ist dazu ausgebildet, den in einem empfangenen Dokument enthaltenen Internetidentifizierer sowie die zugehörige MSISDN auszulesen und einen diese Angaben enthaltenden Eintrag des Adressbuchs zu speichern. Hierfür kann beispielsweise eine J2ME-API vorgesehen werden, die es erlaubt die SMS-Nachrichten aufgrund ihrer Adressierung an die Applikation zu übergeben, ohne dass diese an dem mobilen Endgerät 10 dargestellt werden. Die Speicherung des Eintrags erfolgt beispielsweise über eine Schnittstelle, die der Applikation einen Zugriff auf das Adressbuch gestattet. Beispiele für derartige Schnittstellen sind die "Personal Information Management (PIM) A-Pls" für die "Java™ 2 Platform, Micro Edition" (J2ME), die es erlauben Daten aus externen Quellen in das Adressbuch eines mobilen Endgeräts 10 zu importieren.

Aufgrund des Empfangs eines die Zuordnung zwischen einem Internetidentifizierer und einer MSISDN enthaltenden Dokuments wird mittels der Applikation ein Adressbucheintrag erzeugt. Der Internetidentifizierer des IP-Nutzers wird vorzugsweise in dem Namensfeld des Eintrags gespeichert und die dem IP-Nutzer zugeordneten MSISDN wird bevorzugt in dem Rufnummemfeld des Eintrags gespeichert. Hierzu werden der Internetidentifizierer von dem Adressserver 17 in ein dem Namensfeld eines Adressbucheintrags entsprechendes Namensfeld des Dokuments eintragen und die MSISDN in einem dem Rufnummernfeld des Adressbucheintrags entsprechenden Rufnummemfeld des Dokuments. Hierdurch kann die zur Bearbeitung des Adressbuchs verwendete Applikation die Felder innerhalb des Adressbucheintrags ermitteln, in die der Internetidentifizierer und die MSISDN einzutragen sind.

Anstelle der zuvor beschriebenen netzwerkgesteuerten Erzeugung der die Zuordnungen zwischen Internetidentifizierern und MSISDNs von IP-Nutzern enthaltenen Einträge in das mobile Endgerät 10 eines Mobilfunknutzers kann es selbstverständlich gleichfalls vorgesehen sein, dass der Mobilfunkteilnehmer diese Einträge in üblicher Weise mittels des Internetidentifizierers im mobilen Endgerät 10 die Applikation zur Bearbeitung des Adressbuchs selbst erzeugt. Hierbei gibt der Mobilfunkteilnehmer den Internetidentifizierer eines IP-Nutzers zweckmäßigerweise ebenfalls in dem Namensfeld des Adressbucheintrags und die MSISDN des IP-Nutzers in dem Rufnummernfeld an. Die Zuordnung zwischen dem Internetidentifizierer und der MSISDN des IP-Nutzers wird dem Mobilfunkteilnehmer dabei beispielsweise ebenfalls mittels einer SMS-Nachricht oder auf einem anderen Wege mitgeteilt.

Anhand eines Adressbucheintrags, in dem die Zuordnung zwischen dem Internetidentifizierer und der MSISDN eines IP-Nutzers gespeichert ist, kann der Intemetidentifizierer von dem Mobilfunkteilnehmer so genutzt werden, wie dies üblicherweise auch innerhalb des IP-Netzwerks 12 bei Verwendung von direkt mit dem IP-Netzwerk verbundenen Kommunikationsendgeräten möglich ist.

Wenn der Mobilfunkteilnehmer mittels seines mobilen Endgeräts 10 eine Kommunikationsverbindung zu einem IP-Nutzer bzw. dessen Kommunikationsendgerät 11 aufbauen möchte, dann identifiziert er den IP-Nutzer anhand seines Internetidentifizierers innerhalb des Adressbuchs seines mobilen Endgeräts 10 und wählt diesen aus, um die Kommunikationsverbindung aufzubauen. Aufgrund der Auswahl des Internetidentifizierers in dem Adressbuch wird in dem mobilen Endgerät 10 die dem Internetidentifizierer zugeordnete MSISDN des IP-Nutzers ermittelt, und es wird eine Anforderung für den Aufbau der Kommunikationsverbindung unter Verwendung der MSISDN an das Mobilfunknetzwerk 13 gesendet. Gleichfalls kann der Mobilfunkteilnehmer die MSISDN des IP-Nutzers auch direkt an seinem mobilen Endgerät 10 eingeben, um eine Kommunikationsverbindung zu dem IP-Nutzer aufzubauen. Der Aufbau der Kommunikationsverbindung zu dem Kommunikationsendgerät 11 des IP-Nutzers anhand der dem IP-Nutzer zugeordneten MSISDN erfolgt in der zuvor bereits beschriebenen Weise.

Wenn in dem mobilen Endgerät 10 eine Anforderung für den Aufbau einer Kommunikationsverbindung des Kommunikationsendgeräts 11 des IP-Nutzers empfangen wird, dann kann unter Verwendung des Adressbucheintrags der Internetidentifizierer an der Anzeigeeinrichtung des mobilen Endgeräts 10 angezeigt werden, der eine direkte Identifizierung des Anrufers durch den Mobilfunkteilnehmer ermöglicht. Hierzu wird die dem IP-Nutzer zugeordnete MSISDN ausgelesen, die in der Setup-Nachricht enthalten ist, welche in dem mobilen Endgerät 10 als Benachrichtigung über die Anforderung empfangen wird. Anhand des Adressbucheintrags wird dann der Internetidentifizierer ermittelt, dem die MSISDN zugeordnet ist. Dieser wird nachfolgend an der Anzeigeeinrichtung des mobilen Endgeräts 10 zur Anzeige gebracht.

Im Rahmen der vorliegenden Erfindung wird ein Adressbucheintrag, der eine Zuordnung zwischen dem Internetidentifizierer und der MSISDN eines IP-Nutzers enthält, zudem dazu genutzt, dem Mobilfunkteilnehmer Präsenzinformationen über den Verfügbarkeitsstatus des Kommunikationsendgeräts 11 des IP-Nutzers zugänglich zu machen.

Die Präsenzinformationen geben insbesondere an, ob das Kommunikationsendgerät 11 des IP-Nutzers mit dem IP-Netzwerk 12 verbunden und zur Annahme von Kommunikationsverbindungen verfügbar, d.h. "online" ist, oder ob keine Kommunikationsverbindung zu dem Kommunikationsendgerät 11 des IP-Nutzers aufgebaut werden kann, d.h. dieses "offline" ist, Gleichfalls kann der IP-Nutzer den Verfügbarkeitsstatus seines Kommunikationsendgeräts 11 beispielsweise auf "nicht stören" setzen, wenn dieses zwar online ist, aber keine Kommunikationsverbindungen zu dem Kommunikationsendgerät 11 aufgebaut werden sollen. Dies ist insbesondere dann zweckmäßig, wenn der IP-Nutzer nur in sehr dringenden Fällen kontaktiert werden möchte. Darüber hinaus können die Präsenzinformationen auch weitere Angaben umfassen, wie beispielsweise den Zeitpunkt, in dem wieder eine Kommunikationsverbindung zu dem Kommunikationsendgerät 11 aufgebaut werden kann.

In einer Ausführungsform werden die Präsenzinformationen in dem Kommunikationsserver 14 verwaltet, der hierfür über eine Präsenzdatenbank 22 verfügt, in der die Präsenzinformationen über den Verfügbarkeitsstatus der mit dem Kommunikationsserver 14 verbindbaren Kommunikationsendgerät 11 gespeichert werden. Hierfür ist in der Präsenzdatenbank beispielsweise eine Zuordnung zwischen dem Intemetidentifizierer eines IP-Nutzers und dem aktuellen Verfügbarkeitsstatus des Kommunikationsendgeräts 11 des IP-Nutzers gespeichert.

Wenn sich das Kommunikationsendgerät 11 eines IP-Nutzers an dem IP-Netzwerk 12 bzw. an den Kommunikationsserver 14 anmeldet, so dass Kommunikationsverbindungen zu dem Kommunikationsendgerät 11 aufgebaut werden können, wird der Verfügbarkeitsstatus des Kommunikationsendgeräts 11 in der Präsenzdatenbank 22 auf "online" gesetzt. Wenn das Kommunikationsendgerät 11 des IP-Nutzers nicht an dem Kommunikationsserver 14 angemeldet ist, wird der Verfügbarkeitsstatus in der Präsenzdatenbank 22 auf "offline" gesetzt. Gleichfalls kann es vorgesehen sein, dass der IP-Nutzer den Verfügbarkeitsstatus manuell auf "offline" setzt, wenn er keine Kommunikationsverbindungen annehmen möchte. Andere Verfügbarkeitszustände, wie beispielsweise der Verfügbarkeitsstatus "nicht stören", können von dem IP-Nutzer durch eine Nutzeraktion gesetzt werden. Insbesondere kann der IP-Nutzer den entsprechenden Verfügbarkeitsstatus an seinem Kommunikationsendgerät 11 festlegen, welches diesen dann an den Kommunikationsserver 14 übermittelt, woraufhin der entsprechende Verfügbarkeitsstatus in der Präsenzdatenbank 22 gesetzt wird. Ferner kann der Verfügbarkeitsstatus eines IP-Nutzers anhand von Regeln verändert werden, die in dem Kommunikationsserver 14 oder in der Präsenzdatenbank 22 gespeichert sind. Anhand dieser Regeln kann ein Verfügbarkeitsstatus beispielsweise in Abhängigkeit von dem vorliegenden Wochentag oder der vorliegenden Tageszeit gesetzt werden.

Der Kommunikationsserver 14 stellt die in der Präsenzdatenbank 22 gespeicherten Präsenzinformationen so genannten Beobachtern ("Watcher") zur Verfügung. Hierbei handelt es sich insbesondere um weitere mit dem Kommunikationsserver 14 verbundene Kommunikationsendgeräte 11 von IP-Nutzem und um weitere Server innerhalb des IP-Netzwerks 12. Jeder Beobachter ist dabei innerhalb des Kommunikationsservers 14 für den Erhalt von Präsenzinformationen registriert, welche die Kommunikationsendgeräte 11 eines oder mehrerer festgelegter IP-Nutzer betreffen. Den Beobachtern werden Aktualisierungen der Präsenzinformationen für deren Erhalt sie registriert sind, in einem Push-Verfahren immer dann übermittelt, wenn sich ein betreffender Verfügbarkeitsstatus verändert, d.h. wenn das Kommunikationsendgerät 11 des IP-Nutzers an dem Kommunikationsserver 14 an- oder abgemeldet wird, oder wenn der Verfügbarkeitsstatus des IP-Nutzers in anderer Weise verändert wird.

Im Rahmen der Erfindung ist es vorgesehen, dass der Adressserver 17 oder ein mit dem Adressserver 17 bzw, der Adressdatenbank 18 verbundener weiterer Server als Beobachter in dem Kommunikationsserver 14 registriert ist. Im Folgenden wird davon ausgegangen, dass es sich hierbei um den Adressserver 17 handelt. Dieser ist insbesondere für den Erhalt von Präsenzinformationen über den Verfügbarkeitsstatus der Kommunikationsendgeräte 11 der IP-Nutzer registriert, deren Internetidentifizierer in der Adressdatenbank 18 gespeichert sind. Somit erhält der Adressserver 17 immer dann eine Aktualisierungsnachricht mit der Angabe eines aktualisierten Verfügbarkeitsstatus eines Kommunikationsendgeräts 11 eines dieser IP-Nutzer, wenn sich der Verfügbarkeitsstatus dieses Kommunikationsendgeräts 11 verändert. Die in dem Adressserver 17 empfangenen Präsenzinformationen können dabei beispielsweise in der Adressdatenbank 18 innerhalb der den betreffenden IP-Nutzern zugeordneten Datenbankeinträge gespeichert werden. Die Identifizierung der IP-Nutzer erfolgt innerhalb des Adressservers 17 bzw. innerhalb der Adressdatenbank 18 anhand ihrer Internetidentifizierer, die in den von dem Kommunikationsserver 14 gesendeten Präsenzinformationen angegeben werden.

Von dem Adressserver 17 werden die Präsenzinformationen über den Verfügbarkeitsstatus des Kommunikationsendgeräts 11 eines IP-Nutzers an die mobilen Endgeräte 10 übermittelt, an die zuvor bereits die Zuordnung zwischen dem Internetidentifizierer und der MSISDN des IP-Nutzers gesendet worden sind. Wenn in dem Adressserver 17 aktualisierte Präsenzinformationen über den Verfügbarkeitsstatus des Kommunikationsendgeräts 11 eines bestimmten IP-Nutzers empfangen werden, dann werden dabei zunächst anhand der Adressdatenbank 18 die mobilen Endgeräte 10 ermittelt, an welche die Zuordnung zwischen dem Internetidentifizierer und der MSISDN des IP-Nutzers gesendet worden ist. Ferner wird ein Dokument erzeugt, welches die aktualisierte Präsenzinformation und zumindest die MSISDN des IP-Nutzers enthält, welche die Identifizierung des dem IP-Nutzer zugeordneten Adressbucheintrags innerhalb der das Dokument empfangenden mobilen Endgeräte 10 ermöglicht. Das Dokument wird dann in der zuvor beschriebenen Weise entweder mittels einer SMS- oder einer durch eine SMS-Nachricht angekündigten MMS-Nachricht oder über eine bestehende paketvermittelnde Kommunikationsverbindung zwischen einem mobilen Endgerät 10 und dem IP-Netzwerk 12 an die bestimmten mobilen Endgeräte gesendet. Dabei kann es wiederum vorgesehen sein, dass der Adressserver 17 zunächst prüft, ob eine derartige paketvermittelnde Kommunikationsverbindung besteht, und diese gegebenenfalls für die Übertragung eines Dokuments nutzt. Wenn bei der Prüfung festgestellt wird, dass keine paketvermittelnde Kommunikationsverbindung zwischen dem mobilen Endgerät 10 und dem IP-Netzwerk besteht, kann das Dokument mittels eines SMS- oder einer durch eine SMS-Nachricht angekündigten MMS-Nachricht an das mobile Endgerät 10 übermittelt werden.

Das Dokument ist vorzugsweise wiederum als "elektronische Visitenkarte" im vCard-Format oder einem anderen zur Übertragung von Kontaktdaten geeigneten Format ausgeführt.

Die Präsenzinformation ist dabei in einer Ausführungsform als Namenszusatz in einem Namensfeld des Dokuments enthalten. Insbesondere kann der Internetidentifizierer des betreffenden IP-Nutzers mit einem Zusatz versehen werden, der den Verfügbarkeitsstatus seines Kommunikationsendgeräts 11 angibt. So kann beispielsweise der Zusatz "On" verwendet werden, wenn der IP-Nutzer "online" ist, der Zusatz "Off", wenn der IP-Nutzer "offline" ist und der Zusatz "dnd", wenn der Verfügbarkeitszustand des IP-Nutzers auf "nicht stören" gesetzt worden ist. Zur Angabe dieser Informationen kann das in dem Server erstellte Dokument beispielsweise innerhalb des Namensfeldes den Internetidentifizierer des IP-Nutzers mit dem Zusatz enthalten, der den aktualisierten Verfügbarkeitsstatus des Kommunikationsendgeräts 11 des IP-Nutzers angibt. Falls der Verfügbarkeitsstatus sich in dem Wert "online" ändert, kann der Eintrag das Namensfelds daher beispielsweise die Form "foo(on)@bar.com" haben.

Ferner ist für Einträge in das Adressbuch eines mobilen Endgeräts 10 in der Regel neben einem Namensfeld für den Namen eines Kommunikationspartners auch ein Feld für einen Zusatz, wie beispielsweise den Vornamen des Kommunikationspartners vorgesehen. In einer Ausführungsform ist es daher vorgesehen, dass die den Verfügbarkeitsstatus des Kommunikationsendgeräts 11 eines IP-Nutzers anzeigende Angabe in ein Feld des Dokuments eingebracht wird, welches für den Namenszusatz eines Kommunikationspartners, insbesondere für den Vornamen vorgesehen ist. Der Internetidentifizierer des IP-Nutzers braucht in dieser Ausführungsform nicht in das Namensfeld des Adressbuchs eingetragen zu werden. Eine Eintragung des Internetidentifizierers des IP-Nutzers in das Namensfeld kann jedoch vorgesehen sein.

Darüber hinaus beinhaltet ein in dem Adressserver erzeugtes, Präsenzinformationen enthaltendes Dokument vorzugsweise die MSISDN des betreffenden IP-Nutzers, die in das Rufnummernfeld des Dokuments eingetragen wird und nach Empfang des Dokuments in einem mobilen Endgerät 10 zur Identifizierung des dem IP-Nutzers zugeordneten Adressbucheintrags herangezogen werden kann.

Wenn ein in der zuvor beschriebenen Weise ausgestaltetes, Präsenzinformationen über den Verfügbarkeitsstatus eines Kommunikationsendgeräts 11 eines IP-Nutzers enthaltendes Dokument in einem mobilen Endgeräte 10 empfangen wird, wird es mittels der Adressbuchapplikation ausgewertet. Hierzu wird das Dokument unter Angabe der Portadresse der Adressbuchapplikation an das mobile Endgerät 10 gesendet. Die Adressbuchapplikation liest aus dem Dokument die in dem Rufnummernfeld enthaltene MSISDN aus und ermittelt anhand der MISISDN den Adressbucheintrag, der dem IP-Nutzer zugeordnet ist.

Falls das Dokument den Internetidentifizierer und einen den Verfügbarkeitsstatus angebenden Zusatz innerhalb eines Namensfeldes enthält, wird der in dem Adressbucheintrag gespeicherte Inhalt dieses Namensfeldes durch die genannte Angabe aus dem Dokument ersetzt. Hierzu wird zusammen mit dem Dokument bzw. innerhalb des Dokuments eine Anweisung zur Durchführung dieser Ersetzung von dem Adressserver an das mobile Endgerät 10 gesendet. Gleichfalls kann es auch vorgesehen sein, dass alle in dem Adressbucheintrag enthaltenen Angaben einschließlich der MSISDN des IP-Nutzers durch die in dem empfangenen Dokument enthaltenen Angaben ersetzt werden. Insbesondere kann es auch vorgesehen sein, dass der ursprüngliche Eintrag aus dem Adressbuch gelöscht und ein neuer Eintrag mit den in dem empfangenen Dokument enthaltenen Angaben erzeugt wird.

Wenn das Dokument eine den Verfügbarkeitsstatus des Kommunikationsendgeräts 11 anzeigende Angabe in einem anderen Feld enthält, beispielsweise in einem für den Vornamen eines Kommunikationspartners vorgesehenen Feld, dann wird der Eintrag des entsprechenden Feldes innerhalb des dem IP-Nutzer zugeordneten Eintrags des Adressbuchs durch den in dem Dokument vorhandenen Eintrag ersetzt. Dies erfolgt ebenfalls aufgrund einer entsprechenden in dem Dokument enthaltenen oder zusammen mit dem Dokument an das mobile Endgerät übermittelten Anweisung. Eine zusätzliche Ersetzung der in dem Adressbucheintrag gespeicherten MSISDN durch die in dem empfangenen Dokument und eine weitere zusätzliche Ersetzung des in dem Adressbucheintrag enthaltenen Internetidentifizierers durch den gegebenenfalls in dem empfangenen Dokument enthaltenen Internetidentifizierer kann ebenfalls vorgesehen sein. Insbesondere kann auch der ursprüngliche dem IP-Nutzer zugeordnete Eintrag aus dem Adressbuch gelöscht und ein neuer Eintrag mit den in dem empfangenen Dokument enthaltenen Angaben erzeugt werden.

Bei einer Ausgestaltung des vorgesehenen Präsenzdienstes ist es vorgesehen, dass ein Präsenzinformationen enthaltendes Dokument immer dann von dem Adressserver 17 an die betreffenden mobilen Endgeräte 10 gesendet wird, wenn in dem Adressserver 17 aufgrund einer Veränderung des Verfügbarkeitsstatus eines Kommunikationsendgeräts 11 eines IP-Nutzers von dem Kommunikationsserver 14 gesendete aktualisierte Präsenzinformationen empfangen werden.

In einer weiteren Ausführungsform ist es vorgesehen, dass nach der Übermittelung eines ersten Präsenzinformationen enthaltenden Dokuments an ein mobiles Endgerät 10 ein weiteres Dokument mit aktualisierten Präsenzinformationen über den Verfügbarkeitszustand eines Kommunikationsendgeräts eines IP-Nutzers frühestens nach Ablauf eines vorgegebenen, mit der Übermittelung des ersten Dokuments beginnenden Zeitintervalls übermittelt werden. Wenn sich der Verfügbarkeitsstatus eines Kommunikationsendgeräts 11 eines IP-Nutzers während des Zeitintervalls einmal ändert, dann wird die Übermittelung des weiteren Dokuments mit den aktualisierten Präsenzinformationen bis zum Ablauf des Zeitintervalls verzögert. Wenn sich der Verfügbarkeitsstatus während des Zeitintervalls mehrmals ändert, so werden nach Ablauf des Zeitintervalls lediglich die letzte Veränderung des Verfügbarkeitsstatus repräsentierende Präsenzinformationen an das mobile Endgerät 10 übermittelt. Ferner wird vorzugsweise geprüft, ob sich der bei Ablauf des Zeitintervalls vorliegende Verfügbarkeitsstatus des Kommunikationsendgeräts 11 des IP-Nutzers von dem Verfügbarkeitsstatus zu Beginn des Zeitintervalls unterscheidet. Nach Ablauf des Zeitintervalls werden nur dann Präsenzinformationen an das mobile Endgerät übermittelt, wenn dies der Fall ist.

Der dargestellte Präsenzdienst hat den Vorteil, dass das mobile Endgerät selbst nicht über eine spezielle Applikation zur Bereitstellung von Präsenzinformationen verfügen muss. Dadurch, dass die Präsenzinformationen innerhalb des mobilen Endgeräts als Namenszusätze verarbeitet werden können, ist es möglich, die Präsenzinformationen innerhalb eines Standard-Adressbuchs eines mobilen Endgeräts 10 zu speichern und mittels dieses Adressbuchs anzuzeigen. Für die Aktualisierung der Präsenzinformationen in dem Adressbuch kann die Adressbuchapplikation verwendet werden, die auch für die Eintragung der Zuordnung zwischen dem Internetidentifizierer und der MSISDN des IP-Nutzers verwendet wird.

Somit können dem Mobilfunkteilnehmer in einfacher Weise Präsenzinformationen über den Verfügbarkeitsstatus eines Kommunikationsendgeräts eines IP-Nutzers bereitgestellt werden. Wenn der Mobilfunknutzer das Adressbuch seines mobilen Endgeräts 10 aufruft, dann werden die innerhalb des einem IP-Nutzer zugeordneten Eintrags diesen IP-Nutzer betreffenden Präsenzinformationen anhand des Namenszusatzes angezeigt. Auf diese Weise kann der Mobilfunknutzer vor dem Versuch, eine Kommunikationsverbindung zu dem IP-Nutzer bzw. dessen Kommunikationsendgerät 11 aufzubauen, ermitteln, ob der IP-Nutzer erreichbar ist. Falls dies nicht der Fall ist, kann der Versuch unterlassen werden. Hierdurch kann der Mobilfunknutzer vermeiden, Zeit und Mühe in vergebliche Versuche, eine Kommunikationsverbindung zu dem IP-Nutzer aufzubauen, investieren zu müssen.

### Bezugszeichenliste:

- 10: Mobiles Endgerät
- 11: Kommunikationsendgerät
- 12: IP-Netzwerk
- 13: Mobilfunknetzwerk
- 14: Kommunikationsserver
- 15: Gateway-MSC
- 20: Mobilvermittlungsstelle (MSC)
- 16: Media-Gateway
- 17: Adressserver
- 18: Adressdatenbank
- 19: Short Message Service Center (SMSC)
- 20: Mobilvermittlungsstelle
- 21: Heimatregister
- 22: Präsenzdatenbank
- 25: Serving GPRS Support Node (SGSN)
- 26: Gateway GPRS Support Node (GGSN)
- 27: Multimedia Message Service Center (MMSC)

## Patentansprüche

1. Verfahren zum Bereitstellen von Präsenzinformationen über den Verfügbarkeitsstatus eines mit einem IP-Netzwerk (12) verbundenen ersten Endgeräts (11) eines ersten Teilnehmers, das innerhalb des IP-Netzwerks (12) anhand eines Internetidentifizierers identifizierbar ist, an einem zweiten Endgerät (10) eines zweiten Teilnehmers, das mit einem mit dem IP-Netzwerk (12) verbundenen Telefonnetzwerk (13) verbunden ist, bei dem
- dem Internetidentifizierer eine Rufnummer zugeordnet wird, die für den Aufbau einer Kommunikationsverbindung von dem zweiten Endgerät (10) und zu dem ersten Endgerät (11) heranziehbar ist,
- die Zuordnung zwischen dem Internetidentifizierer und der Rufnummer in einem Eintrag eines Adressbuchs des zweiten Endgeräts (10) gespeichert wird,
- die Präsenzinformationen in einem mit dem IP-Netzwerk (12) verbundenen Server (17) empfangen werden,
- ein die Präsenzinformationen enthaltendes Dokument erzeugt und von dem Server (17) an das zweite Endgerät (10) gesendet wird, und
- der Eintrag des Adressbuchs aufgrund des Empfangs des Dokuments in Abhängigkeit von den Präsenzinformationen verändert wird, so dass die Präsenzinformation innerhalb des zweiten Endgeräts (10) als Namenszusatz verarbeitet wird.

2. Verfahren nach Anspruch 1,
**dadurch gekennzeichnet,**
**dass** der Eintrag des Adressbuchs eine den Internetidentifizierer umfassende erste Angabe in einem Namensfeld aufweist, wobei die erste Angabe in Abhängigkeit von den Präsenzinformationen verändert wird.

3. Verfahren nach Anspruch 2,
**dadurch gekennzeichnet,**
**dass** das Dokument eine den Internetidentifizierer und eine den Verfügbarkeitsstatus anzeigende zweite Angabe umfasst und die in dem Eintrag des Adressbuchs enthaltende erste Angabe durch die zweite Angabe ersetzt wird.

4. Verfahren nach einem der vorangegangenen Ansprüche,
**dadurch gekennzeichnet,**
**dass** in dem zweiten Endgerät (10) eine Applikation ausgeführt wird, die den Eintrag des Adressbuchs aufgrund des Empfangs des Dokuments verändert.

5. Verfahren nach einem der vorangegangenen Ansprüche,
**dadurch gekennzeichnet,**
**dass** Veränderungen des Verfügbarkeitsstatus des ersten Endgeräts (11) in einer mit dem IP-Netzwerk (12) verbundenen Präsenzdatenbank (22) registriert werden und die Präsenzinformationen von der Datenbank (22) an den Server (17) übermittelt werden, wobei der Server (17) in der Datenbank (22) als einer von mehreren mit dem IP-Netzwerk (12) verbundenen Empfängern der Präsenzinformation eingetragen ist.

6. Verfahren nach Anspruch 5,
**dadurch gekennzeichnet,**
**dass** die Präsenzinformationen unter Angabe des Internetidentifizierers von der Präsenzdatenbank (22) an den Server (17) gesendet werden, wobei der Server (17) die dem Internetidentifizierer zugeordnet Rufnummer in einer mit dem Server (17) verbundenen Datenbank (18) ermittelt, um das die Rufnummer enthaltende Dokument zu erzeugen.

7. Verfahren nach einem der vorangegangenen Ansprüche,
**dadurch gekennzeichnet,**
**dass** das Dokument aufgrund einer Veränderung des Verfügbarkeitsstatus des ersten Endgeräts (11) an das zweite Endgerät (10) übermittelt wird.

8. Verfahren nach einem der vorangegangenen Ansprüche,
**dadurch gekennzeichnet,**
**dass** ein aktualisierte Präsenzinformationen enthaltendes Aktualisierungsdokument erst nach Ablauf eines vorgegebenen Zeitintervalls nach der Übermittelung des Dokuments an das zweite Endgerät (10) gesendet wird, wenn sich der Verfügbarkeitsstatus des ersten Endgeräts (11) innerhalb des Zeitintervalls verändert.

9. Verfahren nach einem der vorangegangenen Ansprüche,
**dadurch gekennzeichnet,**
**dass** die Zuordnung zwischen dem Internetidentifizierer und der Rufnummer von dem IP-Netzwerk (12), insbesondere von dem Server (17), an das zweite Endgerät (11) gesendet wird, wobei der Eintrag des Adressbuchs aufgrund des Empfangs der Zuordnung in dem zweiten Endgerät (10) erzeugt wird.

10. Verfahren nach einem der vorangegangenen Ansprüche,
**dadurch gekennzeichnet,**
**dass** die Zuordnung zwischen der Rufnummer und dem Internetidentifizierer aufgrund eines erstmaligen Empfangs einer von dem ersten Endgerät (11) gesendeten Anforderung für den Aufbau einer Kommunikationsverbindung zu dem zweiten Endgerät (10) von dem IP-Netzwerk (12) an das zweite Endgerät (10) übermittelt wird.

11. Verfahren nach einem der vorangegangenen Ansprüche,
**dadurch gekennzeichnet,**
**dass** der erste Teilnehmer eine Kontaktliste erstellt, die wenigstens den Internetidentifizierer des ersten Teilnehmers umfasst, und dass die Zuordnung zwischen dem Internetidentifizierer und der Rufnummer aufgrund eines netzwerkseitigen Empfangs der Kontaktliste an das zweite Kommunikationsendgerät (10) gesendet wird.

12. Verfahren nach einem der vorangegangenen Ansprüche,
**dadurch gekennzeichnet,**
**dass** das Dokument und/oder oder die Zuordnung zwischen dem Internetidentifizierers und der Rufnummer in einer SMS-Nachricht an das zweite Endgerät (10) gesendet wird.

13. Verfahren nach einem der vorangegangenen Ansprüche,
**dadurch gekennzeichnet,**
**dass** das zweite Endgerät (10) über eine paketvermittelnde Verbindung mit dem IP-Netzwerk (12) verbindbar ist, und das Dokument und/oder die Zuordnung zwischen dem Internetidentifizierer und der Rufnummer über die paketvermittelnde Verbindung an das zweite Endgerät (10) übermittelt wird.

14. System zum Bereitstellen von Präsenzinformationen über den Verfügbarkeitsstatus eines mit einem IP-Netzwerk (12) verbundenen ersten Endgeräts (11) eines ersten Teilnehmers, das innerhalb des IP-Netzwerks (12) anhand eines Internetidentifizierers identifizierbar ist, an einem zweiten Endgerät (10) eines zweiten Teilnehmers, das mit einem mit dem IP-Netzwerk (12) verbundenen Telefonnetzwerk (13) verbunden ist, wobei
- dem Internetidentifizierer eine Rufnummer zugeordnet wird, die für den Aufbau einer Kommunikationsverbindung von dem zweiten Endgerät (10) und zu dem ersten Endgerät (11) heranziehbar ist,
- die Zuordnung zwischen dem Internetidentifizierer und der Rufnummer in einem Eintrag eines Adressbuchs des zweiten Endgeräts (10) gespeichert wird,
- die Präsenzinformationen in einem mit dem IP-Netzwerk (12) verbundenen Server (17) empfangen werden,
- ein die Präsenzinformationen enthaltendes Dokument erzeugt und von dem Server (17) an das zweite Endgerät (10) gesendet wird, und
- der Eintrag des Adressbuchs aufgrund des Empfangs des Dokuments in Abhängigkeit von den Präsenzinformationen verändert wird, so dass die Präsenzinformation innerhalb des zweiten Endgeräts (10) als Namenszusatz verarbeitet wird.

## Claims

1. A method for providing presence information about the availability status of a first terminal (11) of a first subscriber, which is connected to an IP network (12), and which can be identified within the IP network (12) by means of an Internet identifier, at a second terminal (10) of a second subscriber, which is connected to a telephone network (13), which is connected to the IP network (12), in which
- a telephone number, which can be used to establish a communication connection from the second terminal (10) and to the first terminal (11), is assigned to the internet identifier,
- the assignment between the Internet identifier and the telephone number is stored in an entry of an address book of the second terminal (10),
- the presence information is received in a server (17), which is connected to the IP network (12),
- a document, which includes the presence information, is created and is sent from the server (17) to the second terminal (10), and
- the entry of the address book is changed as a function of the presence information on the basis of the receipt of the document, so that the presence information is processed as name addition inside the second terminal (10).

2. The method according to claim 1,
**characterized in**
**that** the entry of the address book has a first information in a name field, wherein the first information comprises the Internet identifier, wherein the first information is changed as a function of the presence information.

3. The method according to claim 2,
**characterized in**
**that** the document comprises a second information, which displays the Internet identifier and the availability status, and the first information, which is included in the entry of the address book, is replaced by the second information.

4. The method according to any one of the preceding claims,
**characterized in**
**that** an application, which changes the entry of the address book on the basis of the receipt of the document, is executed in the second terminal (10).

5. The method according to any one of the preceding claims,
**characterized in**
**that** changes of the available status of the first terminal (11) are registered in a presence database (22), which is connected to the IP network (12), and the presence information is transferred from the database (22) to the server (17), wherein the server (17) is registered in the database (22) as one of a plurality of recipients of the presence information, which are connected to the IP network (12).

6. The method according to claim 5,
**characterized in**
**that** the presence information is sent from the presence database (22) to the server (17) by specifying the Internet identifier, wherein the server (17) determines the telephone number, which is assigned to the Internet identifier, in a database (18), which is connected to the server (17), in order to create the document, which includes the telephone number.

7. The method according to any one of the preceding claims,
**characterized in**
**that** the document is transmitted to the second terminal (10) on the basis of a change of the availability status of the first terminal (11).

8. The method according to any one of the preceding claims,
**characterized in**
**that** an update document, which includes updated presence information, is sent to the second terminal (10) only after a specified time interval after the transmission of the document has passed, when the availability status of the first terminal (11) changes within the time interval.

9. The method according to any one of the preceding claims,
**characterized in**
**that** the assignment between the Internet identifier and the telephone number is sent to the second terminal (11) by the IP network (12), in particular by the server (17), wherein the entry of the address book is created in the second terminal (10) on the basis of the receipt of the assignment.

10. The method according to any one of the preceding claims,
**characterized in**
**that** the IP network (12) transmits the assignment between the telephone number and the Internet identifier to the second terminal (10) on the basis of a first-time receipt of a request sent by the first terminal (11) for establishing communication connection to the second terminal (10).

11. The method according to any one of the preceding claims,
**characterized in**
**that** the first subscriber creates a contact list, which comprises at least the Internet identifier of the first subscriber, and that the assignment between the Internet identifier and the telephone number is sent to the second communication terminal (10) on the basis of a receipt of the contact list on the network side.

12. The method according to any one of the preceding claims,
**characterized in**
**that** the document and/or the assignment between the Internet identifier and the telephone number is sent to the second terminal (10) in an SMS message.

13. The method according to any one of the preceding claims,
**characterized in**
**that** the second terminal (10) can be connected to the IP network (12) via a packet-switched connection, and the document and/or the assignment between the Internet identifier and the telephone number is transmitted to the second terminal (10) via the packet-switched connection.

14. A system for providing presence information about the availability status of a first terminal (11) of a first subscriber, which is connected to an IP network (12), and which can be identified within the IP network (12) by means of an Internet identifier, at a second terminal (10) of a second subscriber, which is connected to a telephone network (13), which is connected to the IP network (12), wherein
- a telephone number, which can be used to establish a communication connection from the second terminal (10) and to the first terminal (11), is assigned to the internet identifier,
- the assignment between the Internet identifier and the telephone number is stored in an entry of an address book of the second terminal (10),
- the presence information is received in a server (17), which is connected to the IP network (12),
- a document, which includes the presence information, is created and is sent from the server (17) to the second terminal (10), and
- the entry of the address book is changed as a function of the presence information on the basis of the receipt of the document, so that the presence information is processed as name addition inside the second terminal (10).

## Revendications

1. Procédé destiné à mettre des informations de présence concernant l'état de disponibilité d'un premier terminal (11) raccordé à un réseau IP (12) d'un premier abonné, ledit premier terminal pouvant être identifié au sein du réseau IP (12) au moyen d'un identifiant Internet, à la disposition d'un second terminal (10) d'un second abonné, ledit second terminal étant raccordé à un réseau téléphonique (13) raccordé au réseau IP (12), dans lequel
- un numéro d'appel, qui peut être mis à contribution pour l'établissement d'une liaison de communication du second terminal (10) vers le premier terminal (11), est associé à l'identifiant Internet,
- l'association entre l'identifiant Internet et le numéro d'appel est enregistrée dans un enregistrement d'un répertoire d'adresses du second terminal (10),
- les informations de présence sont reçues dans un serveur (17) raccordé au réseau IP (12),
- un document contenant les informations de présence est généré et envoyé au second terminal (10) par le serveur (17), et
- l'enregistrement du répertoire d'adresses est modifié en fonction des informations de présence en raison de la réception du document, de telle sorte que l'information de présence est traitée dans le second terminal (10) comme complément de nom.

2. Procédé selon la revendication 1,
**caractérisé en ce que**
l'enregistrement du répertoire d'adresses comporte une première indication comprenant l'identifiant Internet dans un champ de nom, la première indication étant modifiée en fonction des informations de présence.

3. Procédé selon la revendication 2,
**caractérisé en ce que**
le document comprend une seconde indication indiquant l'identifiant Internet et une indiquant l'état de disponibilité et la première indication contenue dans l'enregistrement du répertoire d'adresses est remplacée par la seconde indication.

4. Procédé selon l'une des revendications précédentes,
**caractérisé en ce que,**
dans le second terminal (10), une application qui modifie l'enregistrement du répertoire d'adresses en raison de la réception du document, est exécutée.

5. Procédé selon l'une des revendications précédentes,
**caractérisé en ce**
des modifications de l'état de disponibilité du premier terminal (11) sont enregistrées dans une base de données de présence (22) raccordée au réseau IP (12) et les informations de présence sont transmises au serveur (17) par la base de données (22), le serveur (17) étant inscrit dans la base de données (22) comme un de plusieurs destinataires de l'information de présence raccordés au réseau IP (12).

6. Procédé selon la revendication 5,
**caractérisé en ce que**
les informations de présence sont envoyées au serveur (17) par la base de données de présence (22) avec indication de l'identifiant Internet, le serveur (17) déterminant le numéro d'appel associé à l'identifiant Internet dans une base de données (18) raccordée au serveur (17), pour générer le document contenant le numéro d'appel.

7. Procédé selon l'une des revendications précédentes,
**caractérisé en ce que**
le document est transmis au second terminal (10) en raison d'une modification de l'état de disponibilité du premier terminal (11).

8. Procédé selon l'une des revendications précédentes,
**caractérisé en ce que**
un document de mise à jour contenant des informations de présence mises à jour est envoyé au second terminal (10) seulement après l'écoulement d'un intervalle de temps prédéfini après la transmission du document, quand l'état de disponibilité du premier terminal (11) se modifie pendant l'intervalle de temps.

9. Procédé selon l'une des revendications précédentes,
**caractérisé en ce que**
l'association entre l'identifiant Internet et le numéro d'appel est envoyée au second terminal (11) par le réseau IP (12), en particulier par le serveur (17), l'enregistrement du répertoire d'adresses étant généré en raison de la réception de l'association dans le second terminal (10).

10. Procédé selon l'une des revendications précédentes,
**caractérisé en ce que**
l'association entre le numéro d'appel et l'identifiant Internet est transmise au second terminal (10) par le réseau IP (12) en raison d'une réception initiale d'une demande, envoyée par le premier terminal (11), pour établir une liaison de communication vers le second terminal (10).

11. Procédé selon l'une des revendications précédentes,
**caractérisé en ce que**
le premier abonné crée une liste de contacts, qui comprend au moins l'identifiant Internet du premier abonné et **en ce que** l'association entre l'identifiant Internet et le numéro d'appel est envoyée au second terminal de communication (10) en raison d'une réception côté réseau de la liste de contacts.

12. Procédé selon l'une des revendications précédentes,
**caractérisé en ce que**
le document et/ou l'association entre l'identifiant Internet et le numéro d'appel est envoyé(e) au second terminal (10) dans un message SMS.

13. Procédé selon l'une des revendications précédentes,
**caractérisé en ce que**
le second terminal (10) peut être raccordé au réseau IP (12) par le biais d'une liaison à commutation de paquets, et le document et/ou l'association entre l'identifiant Internet et le numéro d'appel est transmis(e) au second terminal (10) par le biais de la liaison à commutation de paquets.

14. Système destiné à mettre des informations de présence concernant l'état de disponibilité d'un premier terminal (11) raccordé à un réseau IP (12) d'un premier abonné, ledit premier terminal pouvant être identifié au sein du réseau IP (12) au moyen d'un identifiant Internet, à la disposition d'un second terminal (10) d'un second abonné, ledit second terminal étant raccordé à un réseau téléphonique (13) raccordé au réseau IP (12), dans lequel
- un numéro d'appel, qui peut être mis à contribution pour l'établissement d'une liaison de communication du second terminal (10) vers le premier terminal (11), est associé à l'identifiant Internet,
- l'association entre l'identifiant Internet et le numéro d'appel est enregistrée dans un enregistrement d'un répertoire d'adresses du second terminal (10),
- les informations de présence sont reçues dans un serveur (17) raccordé au réseau IP (12),
- un document contenant les informations de présence est généré et envoyé au second terminal (10) par le serveur (17), et
- l'enregistrement du répertoire d'adresses est modifié en fonction des informations de présence en raison de la réception du document, de telle sorte que l'information de présence est traitée dans le second terminal (10) comme complément de nom.
